(19) Europäisches Patentamt
European Patent Office
Office européen des brevets

(11) **EP 4 107 579 B1**

(12) **FASCICULE DE BREVET EUROPEEN**

(45) Date de publication et mention
de la délivrance du brevet:
**01.04.2026 Bulletin 2026/14**

(21) Numéro de dépôt: **21708730.3**

(22) Date de dépôt: **16.02.2021**

(51) Classification Internationale des Brevets (IPC):
**G02F 1/015** *(2006.01)*   **G02B 1/00** *(2006.01)*

(52) Classification Coopérative des Brevets (CPC):
**G02F 1/015; G02B 1/002; G02B 1/118**

(86) Numéro de dépôt international:
**PCT/FR2021/050268**

(87) Numéro de publication internationale:
**WO 2021/165608 (26.08.2021 Gazette 2021/34)**

(54) **COMPOSANT OPTIQUE À MÉTASURFACE ENCAPSULÉE ET PROCÉDÉ DE FABRICATION D'UN TEL COMPOSANT**

OPTISCHE KOMPONENTE MIT EINGEKAPSELTER META-OBERFLÄCHE UND VERFAHREN ZUR HERSTELLUNG EINER SOLCHEN KOMPONENTE

OPTICAL COMPONENT WITH ENCAPSULATED METASURFACE AND METHOD FOR MANUFACTURING SUCH A COMPONENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.02.2020 FR 2001657**

(43) Date de publication de la demande:
**28.12.2022 Bulletin 2022/52**

(73) Titulaire: **Commissariat à l'Energie Atomique et aux Energies Alternatives
75015 Paris (FR)**

(72) Inventeurs:
• **PERRILLAT-BOTTONET, Thomas
38054 GRENOBLE CEDEX 09 (FR)**
• **BECKER, Sébastien
38054 GRENOBLE CEDEX 09 (FR)**
• **ABADIE, Quentin
38054 GRENOBLE CEDEX 09 (FR)**

(74) Mandataire: **Santarelli
Tour Trinity
1 bis Place de la Défense
92400 Courbevoie (FR)**

(56) Documents cités:
WO-A1-2018/140502    WO-A1-2019/222070
WO-A2-2020/033930    US-A1- 2019 301 025

**Description**

**Domaine technique**

L'invention concerne le domaine des composants optiques, notamment les composants optiques utilisant des métasurfaces.

Ainsi, l'invention a pour objet un composant optique à métasurface et un procédé de fabrication d'un tel composant.

**État de l'art antérieur**

Les composants optiques à métasurface sont basés sur un agencement de structures sub-longueur d'onde afin de manipuler localement la phase de l'onde et ainsi modifier le front d'onde selon un profil souhaité. Cela offre la possibilité de fournir des composants optiques ultramince et présentant des propriétés que ne peuvent permettre d'obtenir des composants optiques réfractifs classiques.

En particulier, ces composants optiques ont un intérêt prépondérant dans le cadre de l'imagerie infrarouge à température ambiante. En effet, afin de compenser la faible sensibilité des détecteurs infrarouges à température ambiante, il est nécessaire d'utiliser des systèmes optiques à forte ouverture (de l'ordre de f/1), donc relativement complexes et coûteux. L'utilisation de composants optiques à métasurface pourrait permettre de simplifier de tels systèmes optiques et en réduire les coûts, notamment en permettant une compensation des aberrations optiques ou en en fournissant des fonctions de focalisation.

Pour plus d'information concernant de tels composants optiques et sur les méthodes permettant leur fabrication, il est possible de se référer aux travaux de A. She et de ses coauteurs publiés dans le journal scientifique « Optics express » volume 26, numéro 2 pages 1573 à1585.

Néanmoins, si de tels composants optiques à métasurface sont particulièrement intéressants, leur usage, en raison de la taille de structures sub-longueur d'onde, n'est pas forcément aisé en ce qui concerne leur manipulation, leur nettoyage et leur assemblage. De plus, il est difficile d'ajouter des couches antireflet à la surface des structures sub-longueur d'onde, le taux de transmission de tels composants n'est donc généralement pas optimal. Ainsi, si on prend l'exemple de composants optiques à métasurface silicium, la transmittance est de l'ordre de celui d'une interface Air/silicium, c'est-à-dire environ 70%.

De ce fait les inventeurs ont un temps envisagé d'utiliser une couche d'encapsulation afin d'encapsuler les structures sub-longeur d'onde et ainsi faciliter leur usage tout en autorisant l'utilisation d'un traitement antireflet réalisé à la surface de la couche d'encapsulation. Lors de ces tentatives, le résultat a été décevant puisque, même avec un traitement antireflet, les composants optiques à métasurface ainsi encapsulés présentaient une transmittance réduite vis-à-vis de ces mêmes composants optiques à métasurface non encapsulés.

Ainsi, afin de permettre le développement des systèmes optiques comprenant des composants optiques à métasurface, il est nécessaire de fournir des composants optiques à métasurface présentant une transmittance améliorée vis-à-vis des composants optiques à métasurface actuels.

Il est connu du document WO 2019/222070 l'utilisation d'un ensemble de structures sub-longueur d'onde afin de déterminer l'indice de réfraction d'un gaz, ceci à partir de la variation de la transmittance de ces structures sub-longueur d'onde. Dans ce document, aucune fonction de composant optique n'est recherchée, puisqu'il n'y a pas de modifications de la géométrie/agencement des structures sub-longueur pour fournir un gradient spatial de phase qui sont utilisées pour fournir une telle fonction optique. Ainsi le document WO 2019/222070 ne divulgue pas une optique à métasurface en tant que telle.

Ce document divulgue plus précisément un composant de détermination de l'indice de réfraction d'un gaz comprenant :

- un premier support,
- un ensemble de structures sub-longueur d'onde agencé sur une surface du premier support, les structures sub-longueur d'onde formant un réseau périodique de résonateurs à géométrie toutes identiques, comme cela est indiqué au paragraphe [25],
- une couche d'encapsulation, pour encapsuler l'ensemble de structures sublongueur d'onde et former une cavité fermée pour accueillir le gaz à étudier.

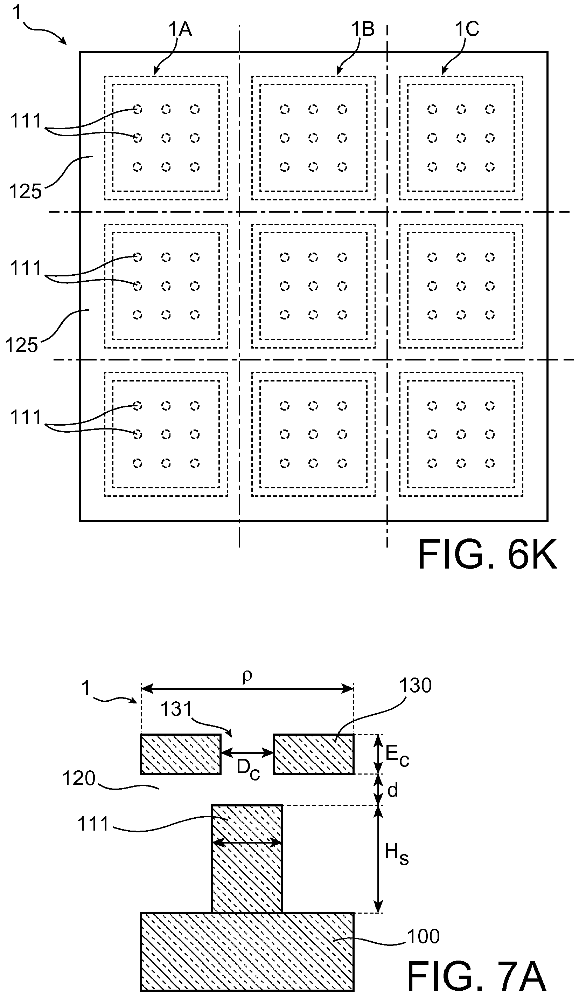

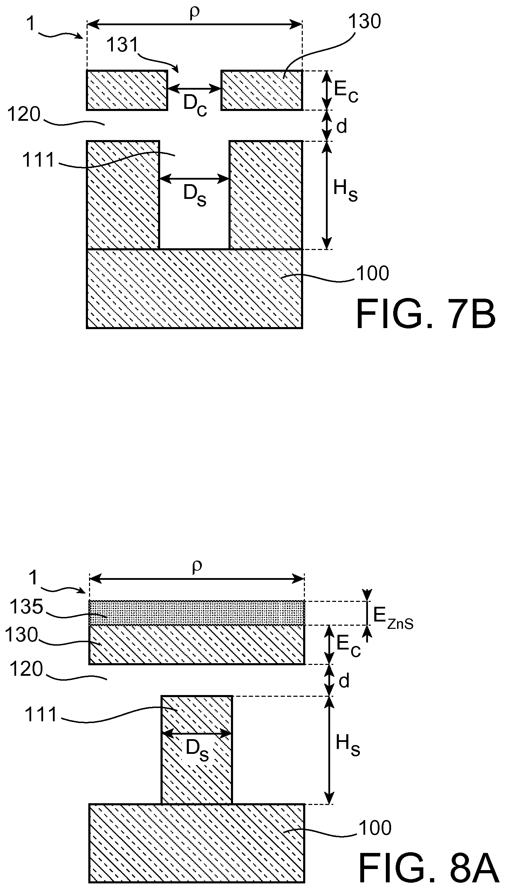

Conformément à l'enseignement de ce document, dans un tel composant, les structures sub-longueur d'onde sont choisies avec un agencement et un dimensionnement spécifique. En effet, pour assurer une réponse en transmission telle que décrite dans leur brevet (Figure 7 courbe 700), ces structures, ou résonateurs, s'inscrivent dans un régime bien spécifique concernant le recouvrement des modes de résonances électrique et magnétique des structures.

En effet, dans l'agencement régulier de structures identiques décrit dans ce document correspondant à celui employé pour la figure 7, il est possible d'annuler les creux de transmission en superposant les deux modes de résonance électrique et magnétique de la structure et ainsi avoir une transmission spectrale plate et large bande. Bien entendu, si l'on s'éloigne des dimensions/agencement particuliers des structures, les résonnances en transmission réapparaissent. Cette amélioration de transmission divulguée par le document WO 2019/222070 ne peut être exploitée dans le cadre d'une optique à métasurface. En effet pour de telles optiques à métasurface le dimensionnement des structures est varié et la condition ne pourra être obtenue pour l'ensemble des structures.

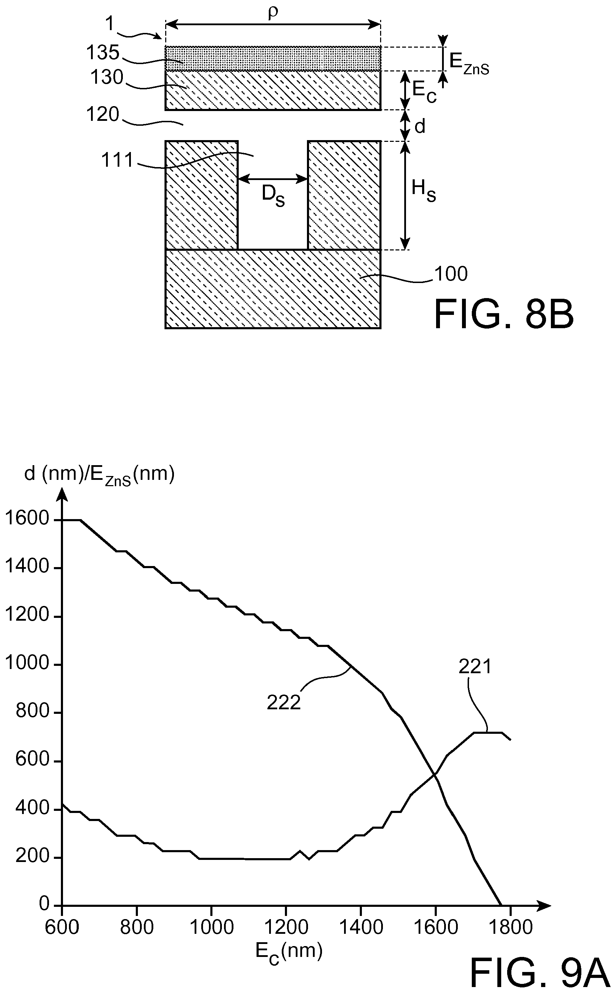

On notera, de plus, que le document WO 2019/222070 concerne les longueurs d'onde du proche infrarouge (voir par exemple les figures 7 et 8) pour lesquelles, conformément aux connaissances générales de l'homme du métier, les pertes par réflexions de Fresnel sont particulièrement faibles en raison de la faiblesse de ces indices et il est donc aisé d'obtenir une bonne transmission sans traitement particulier. Ainsi, dans le cadre du document WO 2019/222070 et de la figure 7, la couche d'encapsulation n'est pas à l'origine de réflexion parasite qui viendrait perturber les mesures transmission.

Ainsi, outre le fait que le document WO 2019/222070 ne divulgue pas d'optique métasurface en tant que telle, il ne fournit pas d'enseignement utile pour la fourniture de composants optique présentant une transmittance améliorée vis-à-vis des composants optiques à métasurface actuels.

## Exposé de l'invention

L'invention a ainsi pour but de résoudre le problème ci-dessus mentionné.

L'invention concerne à cet effet, un composant optique à métasurface pour une plage de longueurs d'onde donnée, le composant optique à métasurface comprenant :

- un support,
- un ensemble de structures sub-longueur d'onde agencé sur une surface du premier support pour former une optique à métasurface dans une plage de longueurs d'onde donnée.

le composant optique à métasurface comprend en outre une couche, dite couche d'encapsulation, sensiblement parallèle à la surface du support, la couche d'encapsulation présentant une épaisseur $E_C$ et étant espacée de l'ensemble de structures par un espace, dit espace encapsulé, sur une première distance d, dans lequel l'épaisseur $E_C$ de la couche d'encapsulation et la première distance d sont adaptées pour que la couche d'encapsulation et l'espace encapsulé forment ensemble un antireflet multicouche dans la plage de longueurs d'onde donnée.

Ainsi, par l'utilisation de l'espace encapsulé présent entre la couche d'encapsulation et l'ensemble de structures pour former, avec la couche d'encapsulation, un antireflet multicouche, le composant optique à métasurface selon l'invention présente une transmittance supérieure à celle d'un composant optique à métasurface classique, c'est-à-dire exempt de couche d'encapsulation ou présentant une couche d'encapsulation non conforme à l'invention telle que préalablement envisagée par les inventeurs.

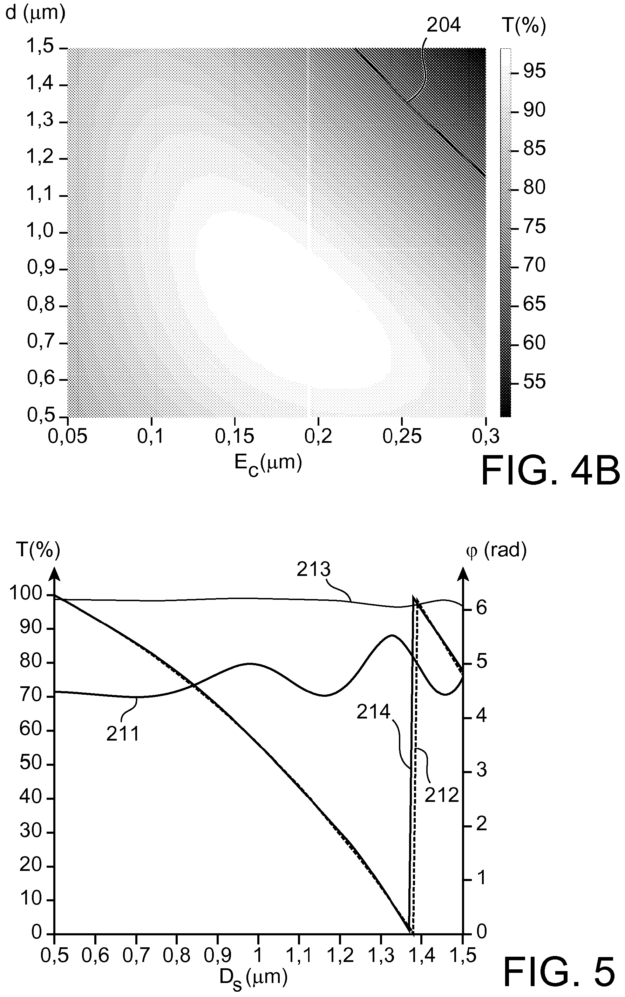

De plus, avec une telle couche encapsulation protégeant l'ensemble de structures, les usages d'un tel composant optique à métasurface, tels que la manipulation, le nettoyage et l'assemblage, sont facilités. De plus, comme cela est décrit en lien avec la figure 5, les inventeurs ont démontrés qu'avec une telle configuration, la couche d'encapsulation ne modifie pas significativement le décalage de phase introduit pas les structures. La configuration de l'invention est donc directement applicable au composant de l'art antérieur sans avoir à modifier l'arrangement des structures à la surface du support.

Par « couche d'encapsulation espacée de l'ensemble de structures sublongueur d'onde sur une première distance d », il doit être entendu, ci-dessus et dans le reste de ce document, que la couche d'encapsulation est espacée, selon une direction perpendiculaire à la première surface du support sur laquelle est agencé l'ensemble de structures sub-longueur d'onde, du sommet de la structure sub-longueur d'onde la plus haute de la distance d.

Par structures sub-longueur d'onde, en lien avec la plage de longueurs d'onde donnée, il doit être entendu que chaque structure présente des dimensions latérales, c'est-à-dire selon les directions comprises dans un plan parallèle à la première surface du support, inférieures à la moitié de la longueur d'onde la plus faible de la plage de longueurs d'onde donnée. Autrement dit, chaque structure présente, selon une section parallèle à la surface du support, une dimension maximale inférieure à la moitié de la longueur d'onde la plus faible de la plage de longueurs d'onde donnée de l'optique à métasurface formée par l'ensemble de structures agencé sur la surface du premier support.

On notera que, bien entendu, s'il n'est pas classique pour l'homme du métier d'utiliser un espace encapsulé pour former un antireflet multicouche avec une couche d'encapsulation, conformément à la présente invention, le dimensionnement d'un tel antireflet multicouche reste le même que celui d'un multicouche classique. Ainsi, comme cela est décrit dans la suite de la présente divulgation, les choix de l'épaisseur $E_C$ et de première distance d pour la formation d'un antireflet multicouche dans la plage de longueurs d'onde donnée peuvent aisément être réalisés par l'homme du métier sur la base de calcul et de simulation de routine.

Les structures sub-longeur d'onde de l'ensemble de structures sub-longeur d'onde peuvent présenter au moins une caractéristique, sélectionnée parmi une dimension géométrique et une distance vis-à-vis d'au moins une structure adjacente, qui est variée le long de la surface du premier support.

Selon l'invention, une telle variation de la géométrie des structures sublongueur d'onde (dimension et/ou agencement) permet d'apporter un gradient spatial de phase $\phi(x, y)$ afin de dévier les rayons conformément à la fonction optique recherchée (focalisation, déviation...). Il est en effet rappelé que dans une telle optique à métasurface, la déviation des rayons lumineux est fournie en premières approximation par la loi de Snell-Descartes généralisée reliant l'angle de sortie des rayons à l'angle d'indice et à ce gradient de phase spatial qui est obtenu par une variation de la géométrie (dimension et agencement) des structures.

La distance vis-à-vis d'au moins une structure adjacente peut être une distance au premier voisin, c'est à dire la distance, telle qu'une distance centre à centre, de la structure vis-à-vis de la structure qui lui est la plus proche (c'est-à-dire le « premier voisin »), ou un pas de réseau, c'est-à-dire une distance, telle qu'une distance centre à centre, vis-à-vis d'une structure adjacente selon une direction particulière de l'ensemble de structures sub-longueur d'onde.

La dimension géométrique peut être une dimension latérale, c'est-à-dire dans le plan du support, ou une hauteur, c'est-à-dire perpendiculairement au plan du support. Le plan du support étant défini par la surface du premier support.

La couche d'encapsulation peut être réalisée en silicium ou en germanium, la plage de longueurs d'onde donnée étant une plage de longueurs d'onde de l'infrarouge,

l'épaisseur $E_C$ de la couche d'encapsulation étant comprise entre 50 et 250 nm et
la première distance d étant comprise entre 0,5 et 1,5 $\mu$m.

L'épaisseur $E_C$ de la couche d'encapsulation peut être comprise entre 50 et 200 nm et la première distance d étant comprise entre 0,6 et 1,2 $\mu$m.

Chaque structure sub-longeur d'onde peut se présenter sous la forme de plot en silicium ou en germanium qui, selon une section parallèle à la surface du premier support, comporte dimension maximale comprise entre 0,5 et 2,5 $\mu$m, l'épaisseur $E_C$ de la couche d'encapsulation étant comprise entre 50 et 200 nm et la première distance d étant comprise entre 0,6 et 1,3 $\mu$m.

Chaque structure sub-longeur d'onde peut se présenter sous la forme de plot en silicium ou en germanium qui, selon une section parallèle à la surface du premier support, comporte dimension maximale comprise entre 2 et 3 $\mu$m, l'épaisseur $E_C$ de la couche d'encapsulation étant comprise entre 50 et 250 nm et la première distance d étant comprise entre 0,7 et 1,2 $\mu$m.

Chaque structure sub-longeur d'onde peut se présenter sous la forme d'une ouverture aménagée dans une couche de silicium ou de germanium, ladite ouverture comportant, selon une section parallèle à la surface du premier support, dimension maximale comprise entre 0,5 et 2,5 $\mu$m, l'épaisseur $E_C$ de la couche d'encapsulation étant comprise entre 50 et 250 nm et la première distance d étant comprise entre 0,5 et 1,2 $\mu$m.

Chaque structure sub-longeur d'onde peut se présenter sous la forme d'une ouverture aménagée dans une couche de silicium ou de germanium, ladite ouverture comportant, selon une section parallèle à la surface du premier support, dimension maximale comprise entre 2 et 3 $\mu$m, l'épaisseur $E_C$ de la couche d'encapsulation étant comprise entre 50 et 250 nm et la première distance d étant comprise entre 0,5 et 1,5 $\mu$m.

Le composant optique à métasurface peut comprendre en outre une couche, dite couche de revêtement, agencée en contact avec une surface de la couche d'encapsulation qui est opposée à l'ensemble de structures sub-longueur d'onde,
ladite couche de revêtement participant, avec la couche d'encapsulation et l'espace encapsulé à la formation de l'antireflet multicouche.

Avec une telle couche de revêtement supplémentaire, il est possible d'optimiser la transmittance du composant optique à métasurface.

La couche de revêtement peut être réalisée dans un matériau choisi parmi le sulfure de zinc et le séléniure de zinc.

La couche d'encapsulation peut comporter une pluralité d'ouvertures traversantes, chaque ouverture traversante étant préférentiellement associée à une structure sub-longueur d'onde respective avec ladite ouverture traversante alignée avec la structure sub-longueur d'onde correspondante.

De telles ouvertures traversantes permettent de modifier l'indice de réfraction effectif de la couche d'encapsulation et permet ainsi d'augmenter la plage d'épaisseur de la couche d'encapsulation permettant d'obtenir la fonction d'antireflet. Il est ainsi plus simple de concevoir un composant optique à métasurface selon l'invention.

La couche d'encapsulation peut comporter une structuration de surface en forme d'excroissances agencées sur la une surface de la couche d'encapsulation 130 se trouvant en regard de l'ensemble de structures.

Au moins une partie des structures sub-longueur d'onde peut présenter, selon une direction perpendiculaire à la surface du premier support, une section variable.

Le premier support peut présenter sur une deuxième surface, opposée à l'ensemble des structures sub-longueur d'onde, une couche antireflet pour la plage de longueurs d'onde donnée.

De cette manière, il est possible de particulièrement optimiser la transmittance du composant optique à métasurface selon l'invention.

On notera que, selon une possibilité de l'invention, l'épaisseur $E_C$ de la couche d'encapsulation et la première distance d peuvent être choisies proches des valeurs conformes aux équations suivantes :

$$\tan(\delta_1)^2 = \frac{(n_{eff} - n_i) \times (n_d^2 - n_i \times n_{eff}) \times n_{Ec}^2}{(n_{Ec}^2 n_{eff} - n_d^2 \times n_i) \times (n_i \times n_{eff} - n_{Ec}^2)}$$

$$\tan(\delta_2)^2 = \frac{(n_{eff} - n_i) \times (n_i \times n_{eff} - n_{Ec}^2) \times n_d^2}{(n_{Ec}^2 n_{eff} - n_d^2 \times n_i) \times (n_d^2 - n_i \times n_{eff})}$$

$$\delta_1 = \frac{2\pi n_{Ecs} E_C}{\lambda}$$

$$\delta_2 = \frac{2\pi n_d \mathrm{d}}{\lambda}$$

Avec $n_i$, $n_{Ec}$, $n_d$ et $n_{eff}$ les indices de réfraction respectifs du milieu incident par lequel est transmis le rayonnement électromagnétique, de la couche d'encapsulation, de l'espace encapsuler, et des structures sub-longueur d'onde, ce dernier indice étant un indice effectif, $\delta_1$ et $\delta_2$ les déphasages générés par respectivement la couche d'encapsulation et l'espace encapsulé et $\lambda$ la longueur d'onde pour laquelle l'ensemble couche d'encapsulation/ espace encapsulé forme le multicouche antireflet.

On notera bien entendu que lors de la résolution de ces équations, il est nécessaire de tenir compte du fait que dans un dispositif optique à métasurface, la répartition des diamètres de structures sub-longueur d'onde est généralement inhomogène le long de la surface du premier support et donc que l'indice effectif des structures sub-longueur d'onde vari le long de la surface du premier support. Ainsi, dans les équations ci-dessus, cet indice de réfraction effectif des structures sub-longueur d'onde peut être un indice de réfraction effectif moyen, voire un indice de réfraction effectif médian. L'indice de réfraction effective des structures sub-longueur d'onde retenu sera généralement compris entre les deux valeurs extrémales prises par l'indice effectif des structures sub-longueur d'onde le long de la surface du premier support.

De plus, conformément aux calculs usuels lors de la conception de multicouche antireflet, l'épaisseur $E_C$ de la couche d'encapsulation et la première distance d déterminées à partir des équations ci-dessus sont respectivement modulo $\left[\frac{\lambda}{2n_{Ecs}}\right]$ et $\left[\frac{\lambda}{2n_d}\right]$.

Par valeurs proches, il est entendu ci-dessus et dans le reste de ce document que l'épaisseur $E_C$ de la couche d'encapsulation et la première distance d peuvent présenter des valeurs comprises entre 40% et 150%, voire entre 20% et 130% ou entre 15% et 120%, des valeurs permettant de répondre à l'équation ci-dessus.

L'invention concerne en outre un procédé de fabrication d'un composant optique à métasurface comprenant les étapes suivantes :

- fourniture d'un premier support,
- formation d'un ensemble de structures sub-longueur d'onde agencé sur une surface du premier support pour former une optique à métasurface dans la plage de longueurs d'onde donnée,

le procédé de fabrication étant caractérisé en ce qu'il comprend en outre l'étape suivante :

- fourniture d'une couche, dite d'encapsulation, la couche d'encapsulation étant sensiblement parallèle à la surface du premier support et présentant une épaisseur $E_c$, la couche d'encapsulation étant en outre espacée de l'ensemble de structures par un espace, dit espace encapsulé, sur une première distance d,

dans lequel le procédé, lors de la fourniture de la couche d'encapsulation, l'épaisseur $E_C$ de la couche d'encapsulation et la première distance d sont adaptées pour que la couche d'encapsulation et l'espace encapsulé forment ensemble un antireflet multicouche dans la plage de longueurs d'onde donnée.

Un tel procédé permet de fournir un composant optique selon l'invention et de bénéficier de l'ensemble des avantages qui y sont associés.

L'étape de fourniture de la couche d'encapsulation peut comprendre les sous-étapes suivantes :

- formation d'au moins un élément d'appui de la couche d'encapsulation en contact avec la surface du premier support, les éléments d'appui s'étendant au-delà de l'ensemble de structures sub-longueur d'onde d'une hauteur égale à la première distance d,
- fourniture de la couche d'encapsulation,
- collage de la couche d'encapsulation en contact avec l'au moins un élément d'appui.

De cette manière il est possible d'aisément définir la première distance d lors de la formation de l'au moins un élément d'appui.

La sous étape de collage de la couche d'encapsulation en contact de l'au moins un élément d'appui peut être un collage à surfaces activées.

La sous étape de collage de la couche d'encapsulation en contact de l'au moins un élément d'appui peut être un collage par diffusion atomique.

La sous étape de collage de la couche d'encapsulation en contact de l'au moins élément d'appui peut être un collage direct oxyde sur oxyde.

De telles étapes de collages directs de la couche d'encapsulation sur l'au moins un élément permettent d'obtenir un collage sans utilisation de matériau de collage intercalaire de type résine ou polymère.

Lors de l'étape de collage de la couche d'encapsulation en contact de l'au moins un élément d'appui, la couche d'encapsulation et l'au moins un élément d'appui peut présenter un différentiel de température, le différentiel de température étant préférentiellement compris entre 10°C et 150°C, voire entre 20 et 100°C.

Un tel différentiel de température pendant la sous-étape de collage permet d'assurer une bonne planéité de la couche d'encapsulation.

L'étape de formation de l'au moins un élément d'appui peut comprendre :

- formation d'une extension respective du ou de chaque élément d' appui sur la surface du premier support, la ou lesdites extensions s'étendant sur une hauteur égale à la première distance d,
- gravure localisée de la surface du premier support pour former le reste du ou de chaque élément d'appui et les structures sub-longueur d'onde de l'ensemble de structures sub-longueur d'onde.

De cette manière, il est possible de former ensemble les structures sublongueur d'onde et l'au moins un élément d'appui. Le nombre d'étape de fabrication s'en trouve optimisé.

Lors de l'étape de fourniture du premier support, il peut être fourni un substrat comprenant le premier support, une couche isolante disposée en contact du premier support et une couche semiconductrice en contact avec la couche isolante, la somme de l'épaisseur de la couche isolante et de l'épaisseur de la couche semiconductrice étant égale à la première distance d,

la formation d'une extension respective du ou de chaque élément d'appui comprenant une gravure localisée de la couche semiconductrice et de la couche isolante.

Par « couche isolante », il doit être entendue ici et dans le reste de ce document que ladite couche est réalisée dans un matériau isolant électrique, c'est-à-dire présentant une permittivité relative supérieure à 1.

## Brève description des dessins

La présente invention sera mieux comprise à la lecture de la description d'exemples de réalisation, donnés à titre purement indicatif et nullement limitatif, en faisant référence aux dessins annexés sur lesquels :

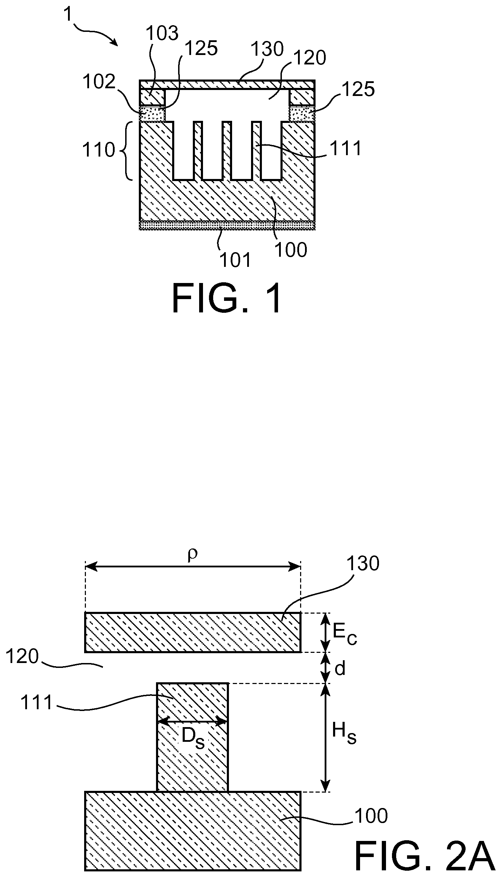

- la figure 1 illustre un composant selon un premier mode de réalisation de l'invention,

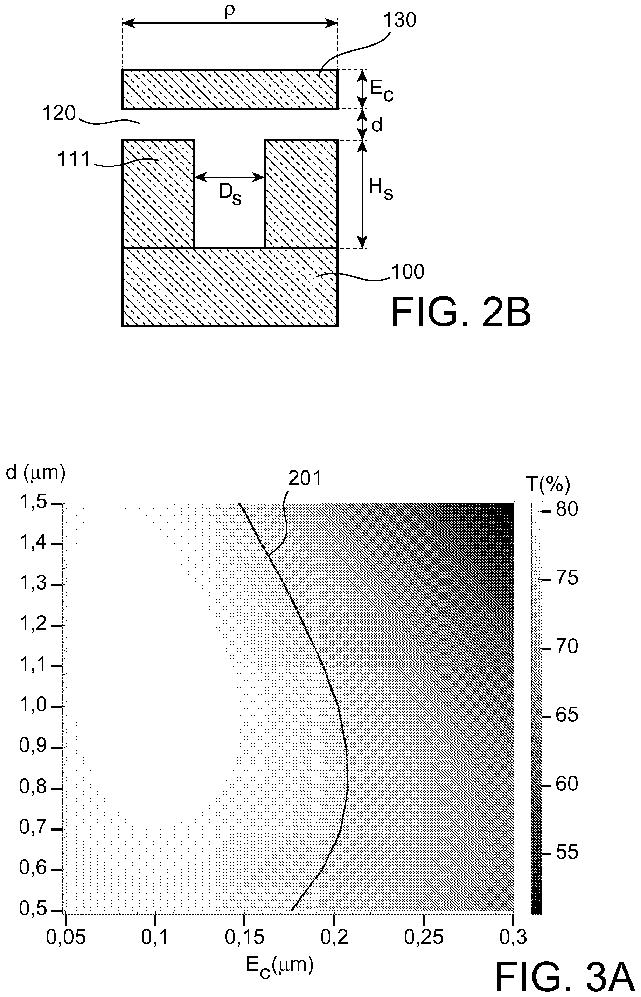

- les figures 2A et 2B illustrent respectivement et en vue en coupe rapprochée schématique sur une structure de l'optique à métasurface présentant, pour la figure 2A, une forme cylindrique de révolution et, pour la figure 2B, la forme d'une ouverture cylindrique,

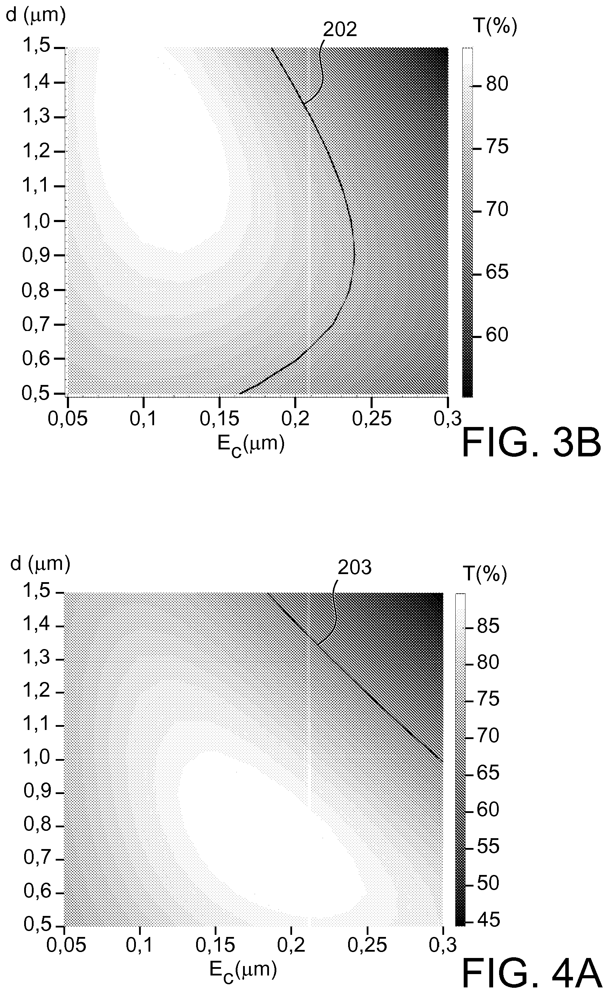

- les figures 3A et 3B illustrent la variation de la transmittance en fonction de l'épaisseur d'une couche d'encapsulation et de la première distance d entre la couche d'encapsulation et des structures sub-longueur d'onde d'une optique à métasurface ceci pour un composant selon l'invention comprenant des structures sub-longueur d'onde de l'optique à métasurface de forme cylindrique présentant un diamètre respectif compris entre 0,5 et 2,5 μm, pour la figure 3A, et entre 2 et 3 μm, pour la figure 3B,

- les figures 4A et 4B illustrent la variation de la transmittance en fonction de l'épaisseur d'une couche d'encapsulation et de la première distance d entre la couche d'encapsulation et des structures sub-longueur d'onde d'une optique à métasurface ceci pour un composant selon l'invention comprenant des structures sub-longueur d'onde de l'optique à métasurface présentant une forme d'ouverture cylindrique présentant un diamètre respectif compris entre 0,5 et 2,5 μm, pour la figure 4A, et entre 0,5 et 1,5 μm, pour la figure 4B,

- la figure 5 illustre la transmittance et le déphasage induit en fonction de la taille des structures de l'optique à métasurface, les structures de l'optique à métasurface présentant une forme d'ouverture cylindrique de révolution, ceci pour à la fois un composant optique selon l'art antérieur et pour un composant optique selon l'invention,

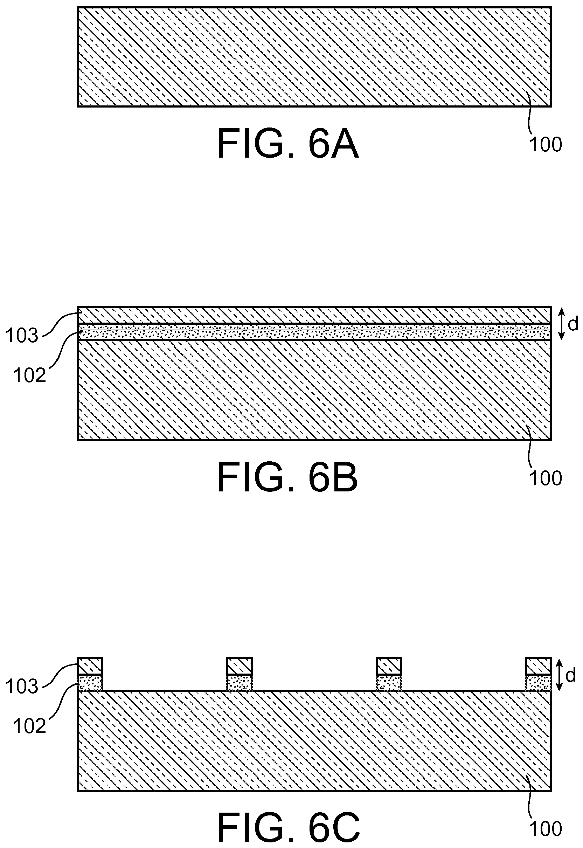

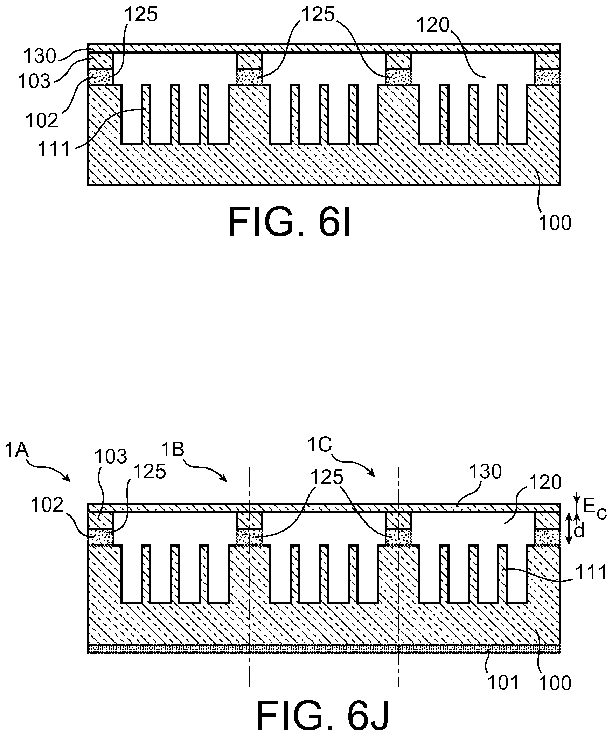

- les figures 6A à 6K illustrent selon une vue en coupe latérale les étapes de fabrication collective de composants optique selon le premier mode de réalisation, avec en figure 6J et 6K une vue en coupe et une vue de dessus desdits compsants avant séparation,

- les figures 7A à 7B illustrent respectivement et en vue en coupe rapprochée schématique sur une structure de l'optique à métasurface selon un deuxième mode de réalisation dans lequel la couche d'encapsulation présente, pour chaque structure, une ouverture associée, les structures sub-longueur d'onde de l'optique à métasurface présentant, pour la figure 7A, une forme cylindrique de révolution et, pour la figure 7B, une ouverture cylindrique,

- les figures 8A à 8B illustrent respectivement et en vue en coupe rapprochée schématique sur une structure de l'optique à métasurface selon un troisième mode de réalisation dans lequel la couche d'encapsulation présente un revêtement complémentaire, les structures sub-longueur d'onde de de l'optique à métasurface présentant, pour la figure 8A, une forme cylindrique de révolution et, pour la figure 8B, une ouverture cylindrique,

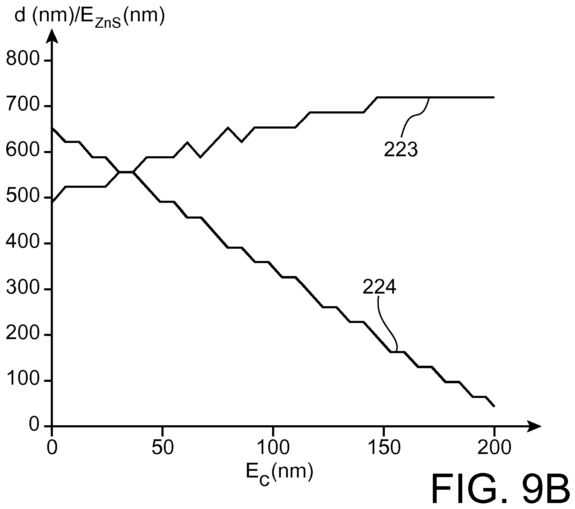

- les figures 9A et 9B illustrent graphiquement la première distance d et l'épaisseur de la couche de revêtement complémentaire calculées en fonction de l'épaisseur de la couche d'encapsulation pour des structures sub longueur d'onde présentant une forme d'ouverture cylindrique de révolution réalisée dans une couche de silicium ceci pour respectivement une épaisseur de couche d'encapsulation comprise entre 600 et 1800 nm et entre 0 et 200 nm,

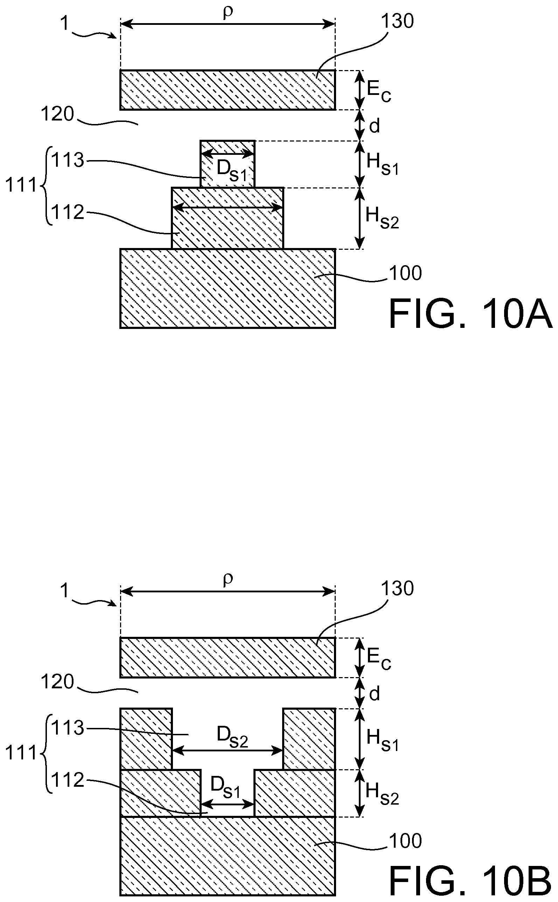

- les figures 10A à 10B illustrent respectivement et en vue en coupe rapprochée schématique sur une structure de l'optique à métasurface selon un quatrième mode de réalisation dans lequel les structures sub-longueur d'onde de l'optique à métasurface présentent une configuration à deux étages, chaque étage de la structure sublongueur d'onde présentant, pour la figure 10A, une forme cylindrique de révolution et, pour la figure 10B, une ouverture cylindrique.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

On notera que par souci de simplification, les structures sub-longueur d'onde sont parfois dénommées simplement « structures » ceci notamment lorsque cela est en relation avec l'optique à métasurface ou le dispositif à métasurface.

## Description des modes de réalisation

La figure 1 illustre un composant optique à métasurface 1 selon l'invention, un tel composant optique à métasurface 1 comportant un ensemble de structures 111 agencé à la surface d'un premier support 100 du composant optique à métasurface 1 pour former une optique à métasurface, ledit composant optique à métasurface comportant en outre, selon le principe de l'invention, une couche, dite d'encapsulation, disposée à une première distance de l'ensemble de métasurface.

Un tel composant optique à métasurface 1 concerne plus particulièrement les systèmes optiques pour la plage de longueurs d'onde de l'infrarouge et notamment dans la gamme de l'infrarouge lointain. Ainsi, les différentes valeurs indiquées dans les modes de réalisation décrits ci-après concernent une application pratique, dans laquelle la plage de longueurs d'onde visée est l'infrarouge lointain, c'est-à-dire comprise entre 3 et 20 μm. Plus précisément, dans les présents modes de réalisation, la plage de longueurs d'onde donnée est une plage de longueurs allant de 7 à 14 μm. Bien entendu, l'homme du métier est parfaitement à même, à partir de la présente divulgation et sur la base de simulations de routine, d'adapter ces valeurs afin de fournir un composant optique à métasurface optimisé selon le principe de l'invention pour une plage de longueurs d'onde autre que celle des infrarouges.

Un composant optique à métasurface 1 selon l'invention comporte :

- le premier support 100,
- l'ensemble de structures sub-longueur d'onde 111 agencé sur une première surface du premier support 100 pour former une optique à métasurface dans la plage de longueurs d'onde donnée,
- une couche, dite d'encapsulation, la couche d'encapsulation présentant une épaisseur $E_c$ et étant espacée de l'ensemble de structures par un espace, dit espace encapsulé, sur une première distance d.

Dans le présent mode de réalisation dans lequel la plage de longueurs d'onde donnée est comprise entre 7 et 14 $\mu$m, le premier support est un support réalisé en silicium Si ou en germanium Ge. Afin de fournir un composant relativement fin, le premier support peut présenter une épaisseur inférieure à 100 $\mu$m. Ainsi, par exemple, le premier support peut présenter une épaisseur de 50 $\mu$m dans le cas d'un premier support en silicium Si.

Comme illustré sur la figure 1, dans le présent mode de réalisation, le premier support peut présenter sur une deuxième surface, celle opposée à l'ensemble des structures sub-longueur d'onde 111, une couche antireflet pour la plage de longueurs d'onde donnée. Une telle couche antireflet 101 peut être, conformément à la pratique usuelle de l'homme du métier, une couche de sulfure de zinc ZnS ou une couche antireflet du type structure en œil de mite plus connue sous sa dénomination anglaise de « Motheye ».

L'ensemble de structures sub-longueur d'onde 111 est agencé sur la première surface du premier support 100 avec, conformément à ce premier mode, de réalisation un agencement périodique des structures sub-longueur d'onde. En effet, dans le présent mode de réalisation, la variation de phase générée par les structures est obtenue par une variation de la taille latérale des structures sub-longueur d'onde. Bien entendu, en variante et conformément aux connaissances de l'homme du métier, il est également envisageable d'obtenir une variation du déphasage en modifiant le pas entre les structures sub-longueur d'onde ou en modifiant leurs formes.

Les structures sub-longueur d'onde 111 peuvent présenter divers formes, celles-ci peuvent, par exemple, présenter une forme cylindrique de révolution pleine, une forme cylindrique creuse, une forme parallélépipédique rectangle, une section en croix ou encore une section hexagonale. Ces mêmes structures sub-longueur d'onde peuvent, selon une autre possibilité de l'invention, prendre la forme d'un trou, ou ouverture, aménagé dans une couche, ce trou pouvant présenter une section latérale circulaire, carrée, hexagonale ou encore en croix.

Dans le présent mode de réalisation, seules deux formes de structures sublongueur d'onde 111 illustrées sur les figures 2A et 2B sont envisagées, les structures sublongueur d'onde 111 de forme cylindrique de révolution et les structures sub-longueur d'onde 111 formées par des ouvertures de section latérale circulaire aménagées dans une couche. La figure 1 illustre ainsi la première solution concernant les structures sublongueur d'onde.

Conformément aux connaissances de l'homme du métier, de telles structures sub-longueur 111, afin d'autoriser l'application d'un déphasage allant de 0 à $2\pi$ avec une variation de taille réduite, doivent préférentiellement être réalisées de manière à présenter à leur interface une variation importante d'indice de réfraction. Dans le cadre de ce premier mode de réalisation dans lequel la plage de longueurs d'onde donnée est comprise entre 7 et 14 $\mu$m, les structures sub-longueur d'onde peuvent être réalisées en silicium, c'est-à-dire avec un indice de réfraction de l'ordre de 3,4 dans l'infrarouge, ou en germanium, c'est-à-dire avec un indice de réfraction de l'ordre de 4 dans l'infrarouge, l'interface étant réalisé avec de l'air ou un vide primaire, voire secondaire, qui présente un indice de réfraction de l'ordre de 1.

On notera que, dans le présent mode de réalisation et comme illustré sur les figures 2A et 2B, les structures sub-longueur d'onde 111 présentent une même hauteur Hs et une dimension latérale Ds variable afin de fournir la variation de déphasage, comme déjà précisé, le pas P, lui est constant. Selon deux exemples particuliers de ce premier mode de réalisation, les structures sub-longueur d'onde 111 peuvent présenter :

- soit une forme cylindrique de révolution pleine, la dimension latérale étant le diamètre dudit cylindre,
- soit une forme d'ouverture cylindrique aménagée dans une couche agencée à la surface du premier support, la dimension latérale étant le diamètre de ladite ouverture.

La couche d'encapsulation 130 est agencée parallèlement à la première surface du premier support 100 en étant espacée de l'ensemble de structures par un espace 120, dit espace encapsulé, sur une première distance d.

Un tel agencement de la couche d'encapsulation 130 espacée de l'ensemble de structures sub-longueur d'onde 111, est obtenu, dans le cadre de ce premier mode de réalisation, aux moyens d'une paroi latérale 125 d'encapsulation, entourant l'ensemble de structures sub-longueur d'onde 111. Cette paroi latérale 125 d'encapsulation peut être continue, de manière à ce que l'espace encapsulé soit hermétique, ou discontinue, l'espace encapsulé étant alors en communication avec l'extérieur.

La paroi latérale 125 peut comprendre, comme illustré sur la figure 1 :

- une première portion s'étendant à partir de la première surface du premier support 100 selon une direction perpendiculaires à la surface du premier support 100 et sur une même hauteur que les structures sub-longueur d'onde,

- une extension comprenant une partie de couche isolante 102 (le caractère isolant étant optionnel) et une partie de couche semiconductrice 103 avec la somme d'épaisseur de ladite couche isolante et de ladite couche semiconductrice est égale à la première distance d.

Dans le cadre de ce premier mode de réalisation, la première portion et la partie de couche semiconductrice 103 sont toutes deux réalisées en silicium Si, tandis que la couche isolante 102 est réalisée en dioxyde de silicium $SiO_2$.

Bien entendu, comme cela sera précisé plus après, la configuration de la paroi latérale décrite ci-dessus n'est qu'un exemple de réalisation conforme à ce premier mode de réalisation, d'autre configuration sont parfaitement envisageables sans que l'on sorte du cadre de l'invention. On notera en particulier, par exemple et ceci sans que l'on sorte du cadre de l'invention, que :

- la partie de couche isolante 102 peut être réalisée dans un autre matériau tel que du nitrure de silicium $Si_3N_4$ ou de l'alumine $Al_2O_3$,
- la partie de couche semiconductrice 103 peut être réalisée en germanium voire, dans un matériau non semiconducteur, tel qu'un métal.

D'une manière identique, il est également envisageable que la paroi latérale ne comporte pas de partie de couche isolante 102, la paroi latérale pouvant être, par exemple, entièrement réalisée en silicium Si.

La paroi latérale 125 forme un élément d'appui 125, l'éléments d'appui 125 s'étendant au-delà de l'ensemble de structures sub-longueur d'onde d'une hauteur égale à la première distance d.

Bien entendu, la paroi latérale 125 décrite ci-dessus est un exemple de réalisation d'élément d'appui selon l'invention. D'autres types d'éléments d'appui, tels que des piliers et/ou des renforts latéraux peuvent être utilisés en complément et/ou en variante à la paroi latérale 125 sans que l'on sorte du cadre de l'invention.

L'espace encapsulé 120 est, dans le présent mode de réalisation, rempli d'air. Bien entendu, en variante, cette espace peut présenter une dépression, tel qu'un vide primaire ou secondaire voire ultra-vide, sans que l'on sorte du cadre de l'invention.

La première couche d'encapsulation est, quant-à-elle, et dans le cadre de ce premier mode de réalisation, réalisée en silicium Si. Bien entendu, d'autres matériaux sont envisageables sans que l'on sorte du cadre de l'invention. On citera notamment le germanium Ge selon une possibilité qui est explicitée par la suite.

La couche d'encapsulation 130 présente une épaisseur $E_C$. Selon le principe de l'invention, l'épaisseur $E_C$ de la couche d'encapsulation et la première distance d sont adaptées pour que la couche d'encapsulation 130 et l'espace encapsulé 120 participent ensemble à la formation d'un antireflet multicouche dans la plage de longueurs d'onde donnée qui, dans le cadre de ce premier mode réalisation est un antireflet bicouche formé de la couche d'encapsulation 130 et du premier espace encapsulé.

Afin d'illustrer la démarche des inventeurs et selon une première approximation dans laquelle l'ensemble de structures sub-longueur d'onde est considéré comme surface homogène en silicium Si, pour obtenir une telle fonction antireflet, la couche d'encapsulation 130 et l'espace encapsulé 120 doivent générer un déphasage $\delta_1$ et $\delta_2$ respectifs qui répond respectivement à :

$$\tan^2 \delta_1 = \frac{(n_1 \text{-} n_{Air})\left(n_{Air}^2 \text{-} n_{Air}.n_1\right).n_1^2}{\left(n_1^3 \text{-} n_{Air}^3\right).\left(n_{Air}.n_1 \text{-} n_1^2\right)} = 0,2126$$

$$\tan^2 \delta_2 = \frac{(n_1 \text{-} n_{Air}).\left(n_{Air}.n_1 \text{-} n_1^2\right).n_{Air}^2}{\left(n_1^3 \text{-} n_{Air}^3\right).\left(n_{Air}^2 \text{-} n_{Air}.n_1\right)} = 0,2126$$

Avec n1 et $n_{Air}$ les indices de réfraction de respectivement du matériau de la couche d'encapsulation 130 et de l'ensemble de structures sub-longueur d'onde 111, c'est-à-dire le silicium Si, dans la plage de longueurs d'onde donnée et celui de l'espace encapsulé et du milieu de réception du rayonnement électromagnétique, c'est-à-dire de l'air.

Autrement dit, les déphasages $\delta_1$ et $\delta_2$ doivent répondre respectivement à :

$$\delta_1 \equiv 0,4321[\pi]$$

$$\delta_2 \equiv 0,4321[\pi]$$

Or, les déphasages $\delta_1$ et $\delta_2$ générés par la couche d'encapsulation 130 et par l'espace encapsulé 120 sont respectivement égaux à :

$$\delta_1 = \frac{2\pi n_1 E_C}{\lambda}$$

$$\delta_2 = \frac{2\pi n_{Air} d}{\lambda}$$

Avec $\lambda$ la longueur d'onde pour laquelle l'ensemble couche d'encapsulation/ espace encapsulé forme le multicouche antireflet.

Ainsi, si on prend une longueur d'onde $\lambda$ de 10,6 $\mu$m, soit sensiblement le milieu de la plage de longueurs d'onde donnée, on obtient les valeurs d'épaisseur $E_C$ de la couche d'encapsulation et de première distance suivantes :

$$E_C \equiv 213 \text{ nm } [\frac{\lambda}{2n_1}]$$

$$d \equiv 729 \text{ nm } [\frac{\lambda}{2n_{Air}}]$$

Néanmoins et comme l'ont constaté les inventeurs, de telles valeurs ne sont pas toujours adaptées dans le cadre de l'invention. Il est en effet nécessaire de prendre en compte l'influence des structures sub-longueur d'onde 111 pour adapter les valeurs déterminées ci-dessus.

En considérant l'influence des structures sub-longueur d'onde 111, les inventeurs ont déterminé que dans le cadre de l'invention et pour une couche d'encapsulation 130 réalisée en silicium Si, qu'il était possible d'obtenir une fonction antireflet pour une épaisseur $E_C$ de couche d'encapsulation comprise entre 50 et 250 nm et pour une première distance d comprise entre 500 nm et 1,5 $\mu$m.

Il est à noter que dans les résultats de simulation décrits ci-après, les composants optiques simulés présentent des diamètres de structures sub-longueur d'onde sur toute la plage de diamètre $D_s$ présentée avec une répartition homogène de ses diamètres sur toute la surface du premier support, ceci afin de représenter une optique fictive représentative.

Afin d'illustrer cela, les figures 3A et 3B montrent la variation de transmittance moyenne à 10,6 $\mu$m calculée par les inventeurs en fonction de l'épaisseur $E_C$ de la couche d'encapsulation 130 et de la première distance d ceci pour un composant optique à métasurface 1 selon le premier mode de réalisation comportant des structures sub-longueur d'onde 111 en silicium Si de forme cylindrique, d'une hauteur $H_S$ de 10 $\mu$m et d'un pas P entre les structures sub-longueur de 3,5 $\mu$m, avec, pour la figure 3A, un diamètre $D_S$ compris entre 0,5 et 2,5 $\mu$m et pour la figure 3B, un diamètre $D_S$ compris entre 2 et 3 $\mu$m. Sur les figures 3A et 3B la valeur de transmittance d'un même composant optique exempt de couche d'encapsulation conformément à l'art antérieur est repérée par les courbes 201, 202.

On peut voir sur les figures 3A et 3B que la transmittance du composant optique à métasurface 1 encapsulé présente une transmittance améliorée vis-à-vis d'un composant optique à métasurface non encapsulé aussi bien pour les structures sub-longueur d'onde 111 de faible diamètre $D_S$ (compris entre 0, et 2,5 $\mu$m, correspondant à la figure 3A) que pour les structures sub-longueur d'onde 111 à diamètre $D_S$ important (compris entre 2 et 2,5 $\mu$m, correspondant à la figure 3B), ces deux plages de diamètre permettant chacune de couvrir un déphasage allant de 0 à $2\pi$ afin de correspondre à une utilisation de composant optique à métasurface, ceci pour les épaisseurs $E_C$ de couche d'encapsulation relativement faibles, typiquement inférieures à 200 nm. Cette amélioration est observée sur toute la plage de valeur de première distance d évaluée. On peut ainsi confirmer, sur la base de ces calculs que l'effet antireflet fourni par la couche d'encapsulation 130 et l'espace encapsulé est observé pour une épaisseur $E_C$ allant de 50 nm à 250 nm et une première distance d allant de 0,6 à 1,4 $\mu$m, en fonction de la taille des structures sub-longueur d'onde.

D'une même façon, les figures 4A et 4B illustrent la variation de transmittance calculée par les inventeurs en fonction de l'épaisseur $E_C$ de la couche d'encapsulation 130 et de la première distance d ceci pour un composant optique à métasurface 1 selon le premier mode de réalisation. Ce composant optique à métasurface 1 comporte, pour la figure 4A, des structures sub-longueur d'onde 111 en forme d'ouverture cylindrique dans une couche silicium Si, d'une hauteur $H_S$ de 10 $\mu$m et avec un pas P entre les structures sublongueur de 3,5 $\mu$m. Le diamètre $D_S$ de ces structures sub-longueur est compris entre 0,5 et 3 $\mu$m. Dans le cas de la figure 4B, les structures sub-longueur d'onde 111 ont également en forme d'ouverture cylindrique dans une couche silicium Si. La hauteur $H_S$ de la couche de silicium est de 15 $\mu$m et le pas P entre les structures sub-longueur de 2 $\mu$m, le diamètre $D_S$ des structures sub-longueur d'onde étant compris entre 0,5 et 1,5 $\mu$m. De plus sur les figures 4A et 4B, la valeur de transmittance d'un même composant optique exempt de couche d'encapsulation conformément à l'art antérieur est repérée par les lignes continues 203, 204.

On peut ainsi voir sur les figures 4A et 4B que la transmittance du composant optique à métasurface 1 encapsulé présente une transmittance améliorée vis-à-vis d'un composant optique à métasurface non encapsulé aussi bien pour les structures sublongueur d'onde 111 conforme au dispositif optique simulé dans le cadre de la figure 4A (diamètre $D_S$ compris entre 0,5 et 3 $\mu$m) que pour les structures sub-longueur d'onde 111 conforme au dispositif optique simulé dans le cadre de la figure 4A (à diamètre $D_S$ compris entre 0,5 et 1,5 $\mu$m) pour une épaisseur $E_C$ de la couche d'encapsulation 130 comprise entre 50 nm et 250 nm.

Afin d'illustrer l'amélioration apportée par l'utilisation d'une couche d'encapsulation avec des valeurs d'épaisseur de la couche d'encapsulation 130 et de première distance d dans ces plages, les inventeurs ont représenté sur la figure 5 les variations de transmittance 213 et de phase 214 calculées pour un composant optique à métasurface 1 en fonction du diamètre de structures sub-longueur d'onde 111 se présentant sous la forme d'ouvertures aménagées dans une couche silicium d'une épaisseur de 15 $\mu$m ceci pour une épaisseur $E_C$ de couche encapsulée de 175 nm et une première distance d de 800 nm. Ces variations sont comparées avec les variations de transmittance 211 et de phase 212 obtenues pour un composant optique à métasurface de l'art antérieur non encapsulé présentant une configuration similaire.

On peut voir que la transmittance est, avec un composant optique à métasurface selon ce premier mode de réalisation, supérieure à 96% alors qu'elle varie entre 70 et 88% pour le composant optique à métasurface de l'art antérieur. Cette amélioration de la transmittance est associée à une variation de phase conservée, montrant que les propriétés de métasurface sont parfaitement préservées dans le cadre de la mise en œuvre de l'invention. Ainsi, il est possible d'adapter un composant optique à métasurface de l'art antérieur sans modification de la disposition et du dimensionnement des structures sub-longueur d'onde de l'ensemble 111.

Afin de montrer que les valeurs identifiées sont compatibles avec différentes configurations de l'optique à métasurface, les inventeurs ont calculé pour divers configurations de structures sub-longueur d'onde les valeurs optimales d'épaisseur $E_C$ de la couche d'encapsulation et de la première distance d. Les résultats sont figurés dans le tableau suivant qui met en parallèle la transmittance calculée pour un composant sans couche d'encapsulation (transmittance T1) et pour ce même composant optique comprenant une couche d'encapsulation selon l'invention (transmittance T2). Les valeurs indiquées dans le présent tableau sont P, le pas entre deux structures, Hs, la hauteur des structures, Ds, plage de valeurs du diamètre des structures, $\Delta\phi$, déphasage maximal permis par la plage de valeurs du diamètre des structures, $E_C$, l'épaisseur de la couche d'encapsulation, d, la distance entre la couche d'encapsulation 130 et l'ensemble de structures, T1, la transmittance sans couche d'encapsulation et T2, la transmittance sans couche d'encapsulation.

| Structures | P | Hs | Ds | $\Delta\phi$ | $E_C$ | d | T1 | T2 |
|---|---|---|---|---|---|---|---|---|
| Vide | - | - | - | 0 | 0,225 $\mu$m | 0,7 $\mu$m | 69,6% | **99,3%** |
| Plots Circulaires | 3.5 $\mu$m | 10 $\mu$m | [0.5 $\mu$m; 2,5$\mu$m] | $2\pi$ | 0,1 $\mu$m | 1,1$\mu$m | 74,8% | **80,5%** |
| Plots Circulaires | 3.5 $\mu$m | 10 $\mu$m | [2 $\mu$m; 3 $\mu$m] | $2\pi$ | 0,11 $\mu$m | 1,2 $\mu$m | 73% | **83, 1%** |
| Plots Circulaires | 2 $\mu$m | 15 $\mu$m | [0,4 $\mu$m; 1,6 $\mu$m] | $2\pi$ | 0,075 $\mu$m | 1 $\mu$m | 77,2% | **81%** |
| Plots Circulaires | 1 $\mu$m | 20 $\mu$m | [0,2 $\mu$m; 0,8 $\mu$m | $2\pi$ | 0,075 $\mu$m | 1 $\mu$m | 75,9% | **79,2%** |
| Trous Circulaires | 3,5 $\mu$m | 10 $\mu$m | [0,5 $\mu$m; 3 $\mu$m] | $2\pi$ | 0,175 $\mu$m | 0,8 $\mu$m | 68,2% | **89, 7%** |
| Trous Circulaires | 2 $\mu$m | 15 $\mu$m | [0,5 $\mu$m; 1,5 $\mu$m] | $2\pi$ | 0,175 $\mu$m | 0,8 $\mu$m | 74,8% | **98, 3%** |
| Trous Circulaires | 1 $\mu$m | 20 $\mu$m | [0,3 $\mu$m; 0,6 $\mu$m] | $2\pi$ | 0,175 $\mu$m | 0,8 $\mu$m | 74,6% | **98, 4%** |
| Plots Croix de Malte | 2 $\mu$m | 15 $\mu$m | [0,3 $\mu$m; 1,7 $\mu$m] | $2\pi$ | 0,075 $\mu$m | 1,2 $\mu$m | 76,4% | **80, 3%** |
| Plots Circulaires creux | 2 $\mu$m | 30 $\mu$m | [0,4 $\mu$m; 1,6 $\mu$m] | $2\pi$ | 0,05 $\mu$m | 1,3 $\mu$m | 75,4% | **77, 3%** |

Sur la base du même type de calculs, les inventeurs ont identifié que, pour la plage de longueurs d'onde donnée du présent mode de réalisation et pour une couche d'encapsulation 130 en germanium, l'ensemble couche d'encapsulation/espace encapsulé forme un multicouche antireflet pour une plage d'épaisseur $E_C$ de la couche d'encapsulation 130 comprise entre 50 et 250 nm et pour une première distance d compris entre 0,5 et 1,5 $\mu$m.

On notera que les inventeurs ont également fourni dans la partie exposé de l'invention une approche formelle concernant les critères d'obtention de l'antireflet multicouche selon l'invention dans une configuration bicouche comprenant la couche d'encapsulation et l'espace encapsulé. Cette approche fait appel à la notion d'indice de réfraction effectif des structures sub-longueur d'onde qui peut notamment être déterminé à partir de simulations.

Les figures 6A à 6K illustre les principales étapes de fabrication collective de composant optique à métasurface selon l'invention, les composants optiques avant séparation, figurée par des lignes de découpes, étant illustrés par la vue en coupe de la figure 6J et la vue de dessus de la figure 6K.

Un tel procédé de fabrication collective peut comprendre les étapes suivantes :

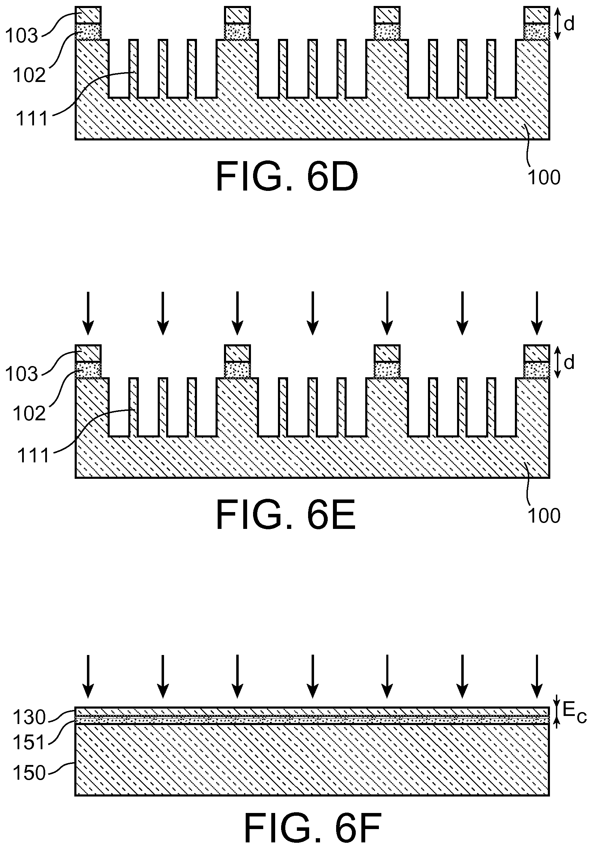

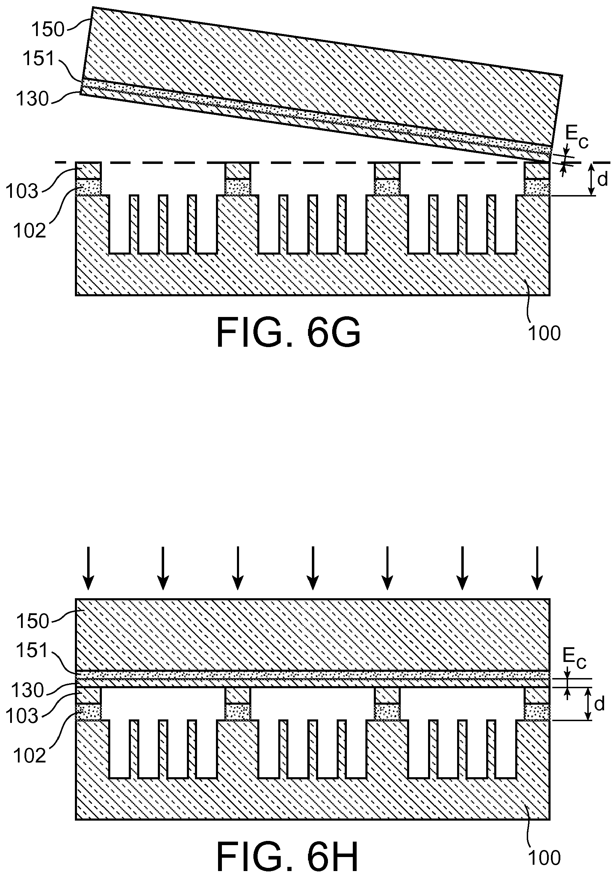

- fourniture du premier support 100 en silicium Si comme illustré sur la figure 6A,
- oxydation du premier support 100 pour former la couche isolante 102 en dioxyde de silicium $SiO_2$,
- dépôt d'une première couche semiconductrice 103 en silicium amorphe a-Si en contact avec la couche isolante, la somme de l'épaisseur de la couche isolante et de la couche semiconductrice étant égale à la première distance d, comme illustré sur la figure 6B,
- gravure localisée de la première couche semiconductrice 103 et de la couche isolante 102 de manière à former les premières extensions des différentes parois latérales 125, comme illustré sur la figure 6C, la figure 6K illustrant l'agencement desdites parois latérales 125,
- gravure localisée de la surface du premier support 100 pour former le reste des parois latérale 125 et les structures sub-longueur d'onde 111, d'une telle manière que les structures sub-longueur d'onde 111 ainsi formées sont aménagées sur la surface du premier support 100 ainsi gravée, comme illustré sur la figure 6D,
- activation ionique de la surface des parois latérales 125 opposées au premier support 100 comme illustré sur la figure 6E,
- fourniture d'un support sacrificiel 150 présentant une deuxième couche isolante 151 et une deuxième couche semiconductrice , plus connu sous le sigle anglais SOI, la deuxième couche semiconductrice étant réalisée en silicium et étant destinée à la formation de la couche d'encapsulation 130,
- amincissement optionnel, par exemple par polissage mécano-chimique, de la deuxième couche semiconductrice afin que cette dernière fasse l'épaisseur $E_C$ de la couche d'encapsulation, la couche d'encapsulation 130 étant ainsi formée,
- activation ionique de la couche d'encapsulation 130, comme illustré sur la figure 6F,
- collage par un collage direct silicium/silicium de la couche d'encapsulation 130 en contact avec la paroi latérale 125 sous vide ultravide ceci afin de fournir un collage à surfaces activées, plus connu sous la dénomination anglaise de « surface activated bonding », comme illustré sur les figure 6G et 6H,
- suppression du support sacrificiel 150 et de la deuxième couche isolante 151 afin de libérer la couche d'encapsulation 130, comme illustré sur la figure 6I,
- dépôt de la couche antireflet 101 sur la deuxième surface du premier support, comme illustré sur les figures 6J et 6K.

Afin d'optimiser, les étapes de collage de la couche d'encapsulation 130 en contact avec la paroi latérale 125, les étapes d'activation ionique des surfaces de la paroi latérale 125 et de la couche d'encapsulation 130 peuvent être réalisées par un bombardement de ces surfaces par des ions d'argon avec une énergie comprise entre 100 et 1000 eV, préférentiellement entre 150 eV et 500 eV, voire égale à 200 eV, ceci avec une intensité comprise entre 0,1 et 1 A, préférentiellement de l'ordre de 250 mA pendant une durée comprise entre 10 et 300 s, préférentiellement entre 30 et 120 s, voire de l'ordre de 60 s. L'étape de collage peut alors être réalisée en positionnant le premier support 100 et la couche d'encapsulation l'un en face de l'autre et les mettant en appui l'un sur l'autre en maintenant une pression comprise entre 0,05 et 1,6 MPa, préférentielle 1 MPa dans une enceinte sous ultravide, c'est-à-dire avec une pression inférieure à $10^{-7}$ mbar.

Pour plus d'information concernant un tel collage à surfaces activées, il renvoyé aux travaux de H. Takagi et ses coauteurs publiés dans le journal scientifique « Applied Physics Letters » volume 68 pages 2222 en février 1996.

On notera qu'en variante, il est également envisageable sans que l'on sorte du cadre de l'invention que le collage de la deuxième couche semiconductrice destinée à la formation de la couche d'encapsulation 130 sur les parois latérales 125 peut être réalisé par un collage par diffusion atomique, plus connu sous la dénomination anglaise « atomic diffusion bonding ». Selon cette variante, le procédé comprend en lieu et place des étapes d'activation ioniques et de collage, les étapes suivantes :

- dépôt sur chacune de la surface de la couche d'encapsulation 130 et de la surface des parois latérales 125 opposées au premier support 100 d'une couche métallique,
- collage, par un collage direct de leurs couches métalliques dans une enceinte ultravide, de la couche d'encapsulation 130 en contact avec la paroi latérale 125 ceci afin de fournir un collage par diffusion atomique.

Pour plus d'information concernant un tel collage par diffusion atomique, il renvoyé aux travaux de T. Shimatsu et de M. Uomoto publiés dans le journal scientifique « Journal of Vaccum Science & Technology B » volume 28 pages 706 le 28 juin 2018.

En variante au collage à surfaces activées, il est également envisageable que le collage de la couche d'encapsulation 130 sur les parois latérales 125 soit réalisé par un collage direct oxyde sur oxyde. Selon une telle variante, non illustré, la couche d'encapsulation 130 et les parois latérales 125 présentent, au moins sur les parties qui sont mises en contact lors du collage, chacune une couche d'oxyde, ces couches oxydes étant de même nature.

Afin de favoriser la planéité de la couche d'encapsulation 130, l'étape de collage peut éventuellement être réalisée avec un différentiel de température entre le premier support 100 et le support sacrificiel 150 de manière à mettre la couche d'encapsulation sous tension. Ce différentiel de température peut être compris entre 10°C et 150°C et est préférentiellement compris entre 20 et 100°C, voire de l'ordre de 50°C.

En variante aux étapes de fourniture du premier support 100, d'oxydation du premier support 100 et du dépôt de la première couche semiconductrice 103, il peut être prévu une étape de fourniture d'un support SOI, la couche isolante et la couche semiconductrice dudit support SOI formant respectivement la première couche isolante 102 et la première couche semiconductrice 103.

Les figures 7A et 7B illustrent deux composants optiques à métasurface 1 selon un deuxième mode de réalisation dans lequel la couche d'encapsulation 130 présente une structuration de surface 131 associée à chacune des structures sub-longueur d'onde 111.

Un composant optique à métasurface 1 selon ce deuxième mode de réalisation se différencie d'un composant à métasurface 1 selon le premier mode de réalisation en ce que sa couche d'encapsulation 130 comprend, pour chaque structure sub-longueur d'onde 111, une structuration de surface 131.

Une telle structuration de surface 131 prend la forme d'une ouverture traversante circulaire aménagée en regard de la structure sub-longueur d'onde correspondante, ceci aussi bien pour les structures sub-longueur d'onde de forme cylindrique de révolution, comme illustré sur la figure 7A, que pour les structures sublongueur présentant une forme d'ouverture ménagée dans une couche, comme illustré sur la figure 7B. Selon cette configuration, chaque ouverture peut présenter un diamètre sensiblement égal à $\lambda/2$, $\lambda$ étant la longueur d'onde médiane de la plage de longueurs d'onde donnée.

Selon une première variante de ce deuxième mode de réalisation non illustrée, les ouvertures peuvent être disjointes des structures de l'ensemble de structures sublongueur d'onde 111.

Selon une deuxième variante non illustrée de ce deuxième mode de réalisation, la structuration de surface peut prendre la forme d'une excroissance agencée sur la une surface de la couche d'encapsulation 130 se trouvant en regard de l'ensemble de structures 111.

Un procédé de fabrication selon ce deuxième procédé se différencie d'un procédé de fabrication selon le premier mode de réalisation en ce qu'il comprend une étape supplémentaire de structuration de la couche d'encapsulation 130 afin de former une structuration de surface 131 pour chacune des structures.

Les figures 8A et 8B illustrent deux composants optiques à métasurface 1 selon un troisième mode de réalisation dans lequel le composant optique à métasurface 1 comprend en outre une couche 135, dite couche de revêtement, agencée en contact avec une surface de la couche d'encapsulation 130 qui est opposée à l'ensemble de structures sub-longueur d'onde 111.

Un composant optique à métasurface 1 selon ce troisième mode de réalisation se différencie d'un composant à métasurface 1 selon le premier mode de réalisation en ce qu'il comprend en outre une couche 135, dite couche de revêtement, agencée en contact avec la surface de la couche d'encapsulation 130 qui est opposée à l'ensemble de structures sub-longueur d'onde 111, la couche de revêtement 135 participant, avec la couche d'encapsulation 130 et l'espace encapsulé à la formation de l'antireflet multicouche.

Dans ce troisième mode de réalisation, la couche de revêtement 135 présente un indice de réfraction inférieur au matériau de la couche d'encapsulation 130. Ainsi cette couche de revêtement peut-être, par exemple, réalisée en sulfure de zinc ZnS, ou en séléniure de zinc ZnSe. La couche de revêtement 135 participe, avec la couche d'encapsulation 130 et l'espace encapsulé 120 à la formation de l'antireflet multicouche du composant optique à métasurface 1 selon le troisième mode de réalisation.

Bien entendu, une tel couche de revêtement 135 participant à la formation de l'antireflet multicouche, son épaisseur $E_{ZnS}$, l'épaisseur de la couche d'encapsulation $E_C$ et la première distance doivent être adaptée pour fournir une telle fonction. Afin d'illustrer une telle adaptation, les figures 9A et 9B représentent la variation calculée par les inventeurs de l'épaisseur de la couche de revêtement 135 (référencé 221 et 223 sur respectivement la figure 9A et 9B), cette couche étant réalisé en sulfure de zinc ZnS, et la première distance d de l'espace encapsulé 120 (référencé 222 et 224 sur respectivement la figure 9A et 9B) en fonction de l'épaisseur de la couche d'encapsulation $E_C$. Les figures 9A et 9B toutes deux un ensemble de structures sub-longueur 111 présentant une forme d'ouverture cylindrique de révolution aménagée dans une couche de silicium. Bien entendu, ces valeurs sont optimisées et, conformément à l'invention, il est possible de fournir un multicouche antireflet conforme à l'invention avec des valeurs voisines à celle indiquée dans les figures 9A et 9B.

On notera que, par exemple, pour une configuration classique de la couche de revêtement 135, c'est-à-dire pour une couche de revêtement 135 en sulfure de zincune épaisseur $E_{ZnS}$ respectant la forme $\lambda/4n$, les valeurs suivantes peuvent être employées : une épaisseur $E_{ZnS}$ de la couche de revêtement 135 d'environ 1,21 $\mu$m, une épaisseur de la couche d'encapsulation $E_C$ d'environ 1 $\mu$m et une première distance d'environ 0,2 $\mu$m.

Les figures 10A et 10B illustrent deux composants optiques à métasurface 1 selon un quatrième mode de réalisation dans lequel chaque structure sub-longueur d'onde 111 présente une configuration à deux étages 112, 113.

Un composant optique à métasurface 1 selon ce quatrième mode de réalisation se différencie donc d'un composant optique à métasurface 1 selon le premier mode de réalisation en ce que chaque structure sub-longueur d'onde 111 présente une configuration à deux étages 112, 113, un premier étage 112 s'étendant à partir de la première surface du premier support 100 et un deuxième étage 113 s'étendant à partir du premier étage 112 en direction de la couche d'encapsulation 130.

Ainsi, selon ce quatrième mode de réalisation, dans le cas où les structures sub-longueur d'onde 111 présentent une forme cylindrique comme illustré sur la figure 9A, le premier et le deuxième étage 112, 113 présentent chacun une forme cylindrique de révolution avec respectivement un premier diamètre $D_{S1}$ et le deuxième diamètre $D_{S2}$ et en étant concentriques, le deuxième diamètre $D_{S2}$ étant inférieur au premier diamètre $D_{S1}$.

D'une manière identique, en ce qui concerne les structures sub-longueur d'onde 111 se présentant sous la forme d'une ouverture cylindrique aménagée dans une couche de silicium, comme illustré sur la figure 9B, le premier et le deuxième étage 112, 113 présentent chacun une ouverture cylindrique avec respectivement un premier diamètre $D_{S1}$ et le deuxième diamètre $D_{S2}$ et en étant concentrique, le deuxième diamètre $D_{S2}$ étant inférieur au premier diamètre $D_{S1}$.

On notera qu'un tel mode de réalisation est décrit afin d'illustrer le fait que l'invention est compatible avec l'ensemble des optique à métasurface quelle que soit la configuration de ses structures sub-longueur d'onde. Plus précisément, si le présent mode de réalisation propose des structures sublongueur d'onde qui présente une section variable selon une direction perpendiculaire à la première surface du premier support 100, l'invention est compatible avec tout type de structures sub-longeur d'onde utilisées dans le cadre de composants optique à métasurface. Ainsi, en variante à ce mode de réalisation, il est également envisageable, sans que l'on sorte du cadre de l'invention, que les structures sub-longueur d'onde présentent des formes autres et variables conformément à l'enseignement des travaux Sajan Shrestha et ses coauteurs publiés dans le journal scientifique Light: Science & Applications volume 7 en 2018 sous la numérotation d'article 87.

Bien entendu, si dans les modes de réalisation décrits ci-dessus, les différentes couches, notamment la couche d'encapsulation et le premier support, sont réalisées dans des matériaux semiconducteurs, tels que du silicium et du germanium dans le cadre d'une plage de longueurs d'onde donnée dans l'infrarouge moyen, ceux-ci peuvent être autres sans que l'on sorte du cadre de l'invention. On notera en particulier que ceux-ci peuvent être, selon une pratique usuelle de l'homme du métier, optimisés pour la plage de longueurs d'onde donnée.

**Revendications**

1. Composant optique à métasurface (1), le composant optique à métasurface (1) comprenant :

   - un premier support (100),
   - un ensemble de structures sub-longueur d'onde (111) agencé sur une surface du premier support (100) pour former une optique à métasurface dans une plage de longueurs d'onde donnée,

   le composant optique (1) métasurface étant **caractérisé en ce qu'**il comprend en outre une couche (130), dite couche d'encapsulation, sensiblement parallèle à la surface du premier support (100), la couche d'encapsulation (130) présentant une épaisseur $E_C$ et étant espacée de l'ensemble de structures par un espace (120), dit espace encapsulé, sur une première distance d,
   dans lequel l'épaisseur $E_C$ de la couche d'encapsulation (130) et la première distance d sont adaptées pour que la couche d'encapsulation (130) et l'espace encapsulé (120) participent ensemble à la formation d'un antireflet multicouche dans la plage de longueurs d'onde donnée,
   et dans lequel les structures sub-longueur d'onde (111) de l'ensemble de structure sub-longueur d'onde (111) présentent au moins une caractéristique, sélectionnée parmi une dimension géométrique et une distance vis-à-vis des structures adjacentes, qui est variée le long de la surface du premier support (100).

2. Composant optique à métasurface (1) selon la revendication 1, dans lequel la couche d'encapsulation (130) est réalisée en silicium ou en germanium et dans laquelle la plage de longueurs d'onde donnée est une plage de longueurs d'onde de l'infrarouge,

   dans lequel l'épaisseur $E_C$ de la couche d'encapsulation (130) est comprise entre 50 et 250 nm et
   dans lequel la première distance d est comprise entre 0,5 et 1,5 $\mu$m.

3. Composant optique à métasurface (1) selon l'une quelconque des revendications 1 ou 2 comprenant en outre une couche (135), dite couche de revêtement, agencée en contact avec une surface de la couche d'encapsulation (130) qui est opposée à l'ensemble de structures sub-longueur d'onde (111),
ladite couche de revêtement (135) participant, avec la couche d'encapsulation (130) et l'espace encapsulé à la formation de l'antireflet multicouche, la couche de revêtement (135) étant préférentiellement réalisée dans un matériau choisi parmi le sulfure de zinc et le séléniure de zinc.

4. Composant optique à métasurface (1) selon l'une quelconque des revendications 1 ou 2, dans lequel la couche d'encapsulation comporte une pluralité d'ouvertures traversantes (131), chaque ouverture traversante étant préférentiellement associée à une structure sub-longueur d'onde (111) respective avec ladite ouverture traversante alignée avec la structure sub-longueur d'onde correspondante (111).

5. Composant optique à métasurface (1) selon l'une quelconque des revendications 1 à 3, dans lequel la couche d'encapsulation comporte une structuration de surface en forme d'excroissances agencées sur une surface de la couche d'encapsulation 130 se trouvant en regard de l'ensemble de structures (111).

6. Composant optique à métasurface (1) selon l'une quelconque des revendications 1 à 5, dans lequel au moins une partie des structures sub-longueur d'onde (111) présente, selon une direction perpendiculaire à la surface du premier support (100), une section variable.

7. Composant optique à métasurface (1) selon l'une quelconque des revendication 1 à 6, dans lequel le premier support (100) présente sur une deuxième surface, opposée à l'ensemble des structures sub-longueur d'onde (111), une couche antireflet (101) pour la plage de longueurs d'onde donnée.

8. Procédé de fabrication d'un composant optique à métasurface selon la revendication 1 comprenant les étapes suivantes :

   - fourniture d'un premier support (100),
   - formation d'un ensemble de structures sub-longueur (111) d'onde agencé sur une surface du premier support (100) pour former une optique à métasurface dans la plage de longueurs d'onde donnée,

   le procédé de fabrication étant **caractérisé en ce qu'**il comprend en outre l'étape suivante :

   - fourniture d'une couche (130), dite d'encapsulation, la couche d'encapsulation (130) étant sensiblement parallèle à la surface du premier support (100) et présentant une épaisseur $E_c$, la couche d'encapsulation (130) étant en outre espacée de l'ensemble de structures par un espace (120), dit espace encapsulé, sur une première distance d,

   Dans lequel le procédé, lors de la fourniture de la couche d'encapsulation, l'épaisseur $E_C$ de la couche d'encapsulation (130) et la première distance d sont adaptées pour que la couche d'encapsulation (130) et l'espace encapsulé (120) forment ensemble un antireflet multicouche dans la plage de longueurs d'onde donnée.

9. Procédé de fabrication selon la revendication 8, dans lequel l'étape de fourniture de la couche d'encapsulation comprend les sous-étapes suivantes :

   - formation d'au moins un élément d'appui (125) de la couche d'encapsulation en contact avec la surface du premier support (100), les éléments d'appui (125) s'étendant au-delà de l'ensemble de structures sub-longueur d'onde d'une hauteur égale à la première distance d,
   - fourniture de la couche d'encapsulation (130),
   - collage de la couche d'encapsulation (130) en contact avec l'au moins un élément d'appui (125).

10. Procédé de fabrication selon la revendication 9, dans lequel la sous étape de collage de la couche d'encapsulation (130) en contact de l'au moins un élément d'appui (125) est choisi parmi :

   - un collage à surfaces activées,
   - un collage par diffusion atomique, et
   - un collage direct oxyde sur oxyde.

## EP 4 107 579 B1

11. Procédé de fabrication selon l'une quelconque des revendications 9 ou 10, dans laquelle lors de l'étape de collage de la couche d'encapsulation (130) en contact de l'au moins un élément d'appui (125), la couche d'encapsulation et l'au moins un élément d'appui (125) présente un différentiel de température, le différentiel de température étant préférentiellement compris entre 10°C et 150°C, voire entre 20 et 100°C.

12. Procédé de fabrication selon l'une quelconque des revendications 9 à 11 dans lequel l'étape de formation de l'au moins un élément d'appui (125) comprend :

   - formation d'une extension respective du ou de chaque élément d'appui (125) sur la surface du premier support (100), la ou lesdites extensions s'étendant sur une hauteur égale à la première distance d,
   - gravure localisée de la surface du premier support (100) pour former le reste du ou de chaque élément d'appui (125) et les structures sub-longueur d'onde (111) de l'ensemble de structures sub-longueur d'onde (111).

13. Procédé de fabrication selon la revendication 12, dans lequel lors de l'étape de fourniture du premier support (100), il est fourni un substrat comprenant le premier support (100), une couche isolante (102) disposée en contact du premier support et une couche semiconductrice (103) en contact avec la couche isolante (102), la somme de l'épaisseur de la couche isolante (102) et de l'épaisseur de la couche semiconductrice (103) étant égale à la première distance d, et dans lequel la formation d'une extension respective du ou d chaque élément d'appui(125), comprend une gravure localisée de la couche semiconductrice (103) et de la couche isolante (102).

**Patentansprüche**

1. Optische Metaoberflächenkomponente (1), wobei die optische Metaoberflächenkomponente (1) Folgendes umfasst:

   - einen ersten Träger (100),
   - eine Baugruppe von Unterwellenlängenstrukturen (111), die auf einer Oberfläche des ersten Trägers (100) angeordnet sind, um eine Metaoberflächenoptik in einem angegebenen Wellenlängenbereich zu bilden,
   wobei die optische Metaoberflächenkomponente (1) **dadurch gekennzeichnet ist, dass** sie ferner eine Schicht (130), eine Einkapselungsschicht, im Wesentlichen parallel zu der Oberfläche des ersten Trägers (100), umfasst,
   wobei die Einkapselungsschicht (130) eine Dicke $E_C$ besitzt und über einen ersten Abstand d von der Baugruppe von Strukturen durch einen Raum (120), einen eingekapselten Raum, beabstandet ist,
   wobei die Dicke $E_C$ der Einkapselungsschicht (130) und der erste Abstand d so angepasst sind, dass die Einkapselungsschicht (130) und der eingekapselte Raum (120) zusammen an der Bildung eines mehrschichtigen Antireflexionsmittels in dem angegebenen Wellenlängenbereich beteiligt sind,
   und wobei die Unterwellenlängenstrukturen (111) der Unterwellenlängenstrukturbaugruppe (111) mindestens ein Merkmal aufweisen, das aus einer geometrischen Abmessung und einem Abstand zu benachbarten Strukturen ausgewählt ist, der entlang der Oberfläche des ersten Trägers (100) variiert ist.

2. Optische Metaoberflächenkomponente (1) nach Anspruch 1, wobei die Einkapselungsschicht (130) aus Silizium oder Germanium hergestellt ist und wobei der angegebene Wellenlängenbereich ein Wellenlängenbereich des Infrarots ist,

   wobei die Dicke $E_C$ der Einkapselungsschicht (130) zwischen 50 und 250 nm beträgt und
   wobei der erste Abstand d zwischen 0,5 und 1,5 $\mu$m beträgt.

3. Optische Metaoberflächenkomponente (1) nach einem der Ansprüche 1 oder 2, die ferner eine Schicht (135), eine Beschichtungsschicht, umfasst, die in Kontakt mit einer Oberfläche der Einkapselungsschicht (130) angeordnet ist, die gegenüber der Baugruppe von Unterwellenlängenstrukturen (111) steht,
   wobei die Beschichtungsschicht (135) mit der Einkapselungsschicht (130) und dem eingekapselten Raum an der Bildung des mehrschichtigen Antireflexionsmittels beteiligt ist, wobei die Beschichtungsschicht (135) vorzugsweise aus einem Material hergestellt ist, das aus Zinksulfid und Zinkselenid ausgewählt ist.

4. Optische Metaoberflächenkomponente (1) nach einem der Ansprüche 1 oder 2, wobei die Einkapselungsschicht eine Vielzahl von Durchgangsöffnungen (131) aufweist, wobei jede Durchgangsöffnung vorzugsweise mit einer jeweiligen Unterwellenlängenstruktur (111) verbunden ist, wobei die Durchgangsöffnung mit der entsprechenden Unterwellenlängenstruktur (111) ausgerichtet ist.

5. Optische Metaoberflächenkomponente (1) nach einem der Ansprüche 1 bis 3, wobei die Einkapselungsschicht eine wuchsförmige Oberflächenstrukturierung aufweist, die auf einer der Strukturgruppe (111) gegenüberliegenden Oberfläche der Einkapselungsschicht 130 angeordnet ist.

6. Optische Metaoberflächenkomponente (1) nach einem der Ansprüche 1 bis 5, wobei mindestens ein Teil der Unterwellenlängenstrukturen (111) in einer zu der Oberfläche des ersten Trägers (100) senkrechten Richtung einen variablen Querschnitt besitzt.

7. Optische Metaoberflächenkomponente (1) nach einem der Ansprüche 1 bis 6, wobei der erste Träger (100) auf einer zweiten Oberfläche, gegenüber der Baugruppe der Unterwellenlängenstrukturen (111), eine Antireflexionsschicht (101) für den angegebenen Wellenlängenbereich besitzt.

8. Verfahren zur Herstellung einer optischen Metaoberflächenkomponente nach Anspruch 1, umfassend die folgenden Schritte:

   - Bereitstellen eines ersten Trägers (100),
   - Bilden einer Baugruppe von Unterwellenlängenstrukturen (111), die auf einer Oberfläche des ersten Trägers (100) angeordnet sind, um eine Metaoberflächenoptik in dem angegebenen Wellenlängenbereich zu bilden,

   wobei das Herstellungsverfahren **dadurch gekennzeichnet ist, dass** es ferner den folgenden Schritt umfasst:

   - Bereitstellen einer Einkapselungsschicht (130), wobei die Einkapselungsschicht (130) im Wesentlichen parallel zu der Oberfläche des ersten Trägers (100) ist und eine Dicke $E_C$ besitzt, wobei die Einkapselungsschicht (130) ferner über einen ersten Abstand d von der Baugruppe von Strukturen durch einen Raum (120), einen eingekapselten Raum, beabstandet ist,

   wobei bei dem Verfahren bei dem Bereitstellen der Einkapselungsschicht die Dicke $E_C$ der Einkapselungsschicht (130) und der erste Abstand d so angepasst sind, dass die Einkapselungsschicht (130) und der eingekapselte Raum (120) zusammen ein mehrschichtiges Antireflexionsmittel in dem angegebenen Wellenlängenbereich bilden.

9. Herstellungsverfahren nach Anspruch 8, wobei der Schritt des Bereitstellens der Einkapselungsschicht die folgenden Unterschritte umfasst:

   - Bilden mindestens eines Stützelements (125) der Einkapselungsschicht in Kontakt mit der Oberfläche des ersten Trägers (100), wobei sich die Stützelemente (125) über die Baugruppe von Unterwellenlängenstrukturen um eine Höhe, die dem ersten Abstand d entspricht, hinaus erstrecken,
   - Bereitstellen der Einkapselungsschicht (130),
   - Verkleben der Einkapselungsschicht (130) in Kontakt mit dem mindestens einen

   Stützelement (125).

10. Herstellungsverfahren nach Anspruch 9, wobei der Unterschritt des Verklebens der Einkapselungsschicht (130) in Kontakt mit dem mindestens einen Stützelement (125) aus Folgendem ausgewählt ist:

    - einer Verklebung mit aktivierten Oberflächen,
    - einer Atomdiffusionsverklebung, und
    - einer direkten Verklebung Oxid auf Oxid.

11. Herstellungsverfahren nach einem der Ansprüche 9 oder 10, wobei bei dem Schritt des Verklebens der Einkapselungsschicht (130) in Kontakt mit dem mindestens einen Stützelement (125) die Einkapselungsschicht und das mindestens eine Stützelement (125) eine Temperaturdifferenz besitzen, wobei die Temperaturdifferenz vorzugsweise zwischen 10 °C und 150 °C oder sogar zwischen 20 und 100 °C liegt.

12. Herstellungsverfahren nach einem der Ansprüche 9 bis 11, wobei der Schritt des Bildens des mindestens einen Stützelements (125) Folgendes umfasst:

    - Bilden einer jeweiligen Erweiterung des oder jedes Stützelements (125) auf der Oberfläche des ersten Trägers (100), wobei sich die Erweiterung bzw. Erweiterungen über eine Höhe erstrecken, die dem ersten Abstand d entspricht,
- lokalisiertes Ätzen der Oberfläche des ersten Trägers (100), um den Rest des oder jedes Stützelements (125) und der Unterwellenlängenstrukturen (111) der Baugruppe von Unterwellenlängenstrukturen (111) zu bilden.

13. Herstellungsverfahren nach Anspruch 12, wobei bei dem Schritt des Bereitstellens des ersten Trägers (100) ein Substrat bereitgestellt wird, das den ersten Träger (100), eine Isolierschicht (102), die in Kontakt mit dem ersten Träger angeordnet ist, und eine Halbleiterschicht (103), die in Kontakt mit der Isolierschicht (102) steht, umfasst, wobei die Summe der Dicke der Isolierschicht (102) und der Dicke der Halbleiterschicht (103) gleich dem ersten Abstand d ist,
und wobei das Bilden einer jeweiligen Erweiterung des oder jedes Stützelements(125) eine lokalisierte Ätzen der Halbleiterschicht (103) und der Isolierschicht (102) umfasst.

**Claims**

1. Metasurface optical component (1), the metasurface optical component (1) comprising:

   - a first substrate (100),
   - a set of subwavelength structures (111) arranged on a surface of the first substrate (100) to form a metasurface optical component in a given wavelength range,

     the metasurface optical component (1) **being characterized in that** it also includes a layer (130), referred to as an encapsulation layer, that is substantially parallel to the surface of the first substrate (100), the encapsulation layer (130) having a thickness $E_C$ and being spaced apart from the set of structures by a space (120), referred to as the encapsulated space, over a distance d,
     wherein the thickness $E_C$ of the encapsulation layer (130) and the first distance d are adapted so that the encapsulation layer (130) and the encapsulated space (120) together form a multilayer antireflective coating in the given wavelength range, and
     wherein the subwavelength structures (111) of the set of subwavelength structures (111) have at least one feature, selected from a geometric dimension and a distance with respect to adjacent structures, that varies along the surface of the first substrate (100).

2. Metasurface optical component (1) according to claim 1, wherein the encapsulation layer (130) is made of silicon or germanium and wherein the given wavelength range is an infrared wavelength range,

   wherein the thickness $E_C$ of the encapsulation layer (130) is between 50 and 250 nm, and
   wherein the first distance d is between 0.5 and 1.5 $\mu$m.

3. Metasurface optical component (1) according to any one of claims 1 to 2 also including a layer (135), referred to as a coating layer, arranged in contact with a surface of the encapsulation layer (130) that is opposite to the set of subwavelength structures (111),
   said coating layer (135) being involved, with the encapsulation layer (130) and the encapsulated space, in the formation of the multilayer antireflective coating, the coating layer (135) preferably being made of a material chosen from zinc sulfide and zinc selenide.

4. Metasurface optical component (1) according to any one of claims 1 to 2, wherein the encapsulation layer has a plurality of through-openings (131), each through-opening preferably being associated with a respective subwavelength structure (111) with said through-opening aligned with the corresponding subwavelength structure (111).

5. Metasurface optical component (1) according to any one of claims 1 to 3, wherein the encapsulation layer has a surface structuring in the form of protuberances arranged on the surface of the encapsulation layer (130) located opposite the set of structures (111).

6. Metasurface optical component (1) according to any one of claims 1 to 5, wherein at least some of the subwavelength structures (111) have, in a direction perpendicular to the surface of the first substrate (100), a variable cross-section.

7. Metasurface optical component (1) according to any one of claims 1 to 6, wherein the first substrate (100) has on a second surface, opposite to the set of subwavelength structures (111), an antireflective layer (101) for the given wavelength range.

8. Method for manufacturing a metasurface optical component according to claim 1 comprising the following steps:

    - providing a first substrate (100),
    - forming a set of subwavelength structures (111) arranged on a surface of the first substrate (100) to form a metasurface optic in the given wavelength range,

the manufacturing method being **characterized in that** it also includes the following step:

    - providing a so-called encapsulation layer (130), the encapsulation layer (130) being substantially parallel to the surface of the first substrate (100) and having a thickness $E_C$, the encapsulation layer (130) also being spaced apart from the set of structures by a space (120), referred to as the encapsulated space, over a distance d,

in which method, when providing the encapsulation layer, the thickness $E_C$ of the encapsulation layer (130) and the first distance d are adapted so that the encapsulation layer (130) and the encapsulated space (120) together form a multilayer antireflective coating in the given wavelength range.

9. Manufacturing method according to claim 8, wherein the step of providing the encapsulation layer comprises the following sub-steps:

    - forming at least one supporting element (125) for supporting the encapsulation layer in contact with the surface of the first substrate (100), the supporting elements (125) extending beyond the set of subwavelength structures by a height equal to the first distance d,
    - providing the encapsulation layer (130),
    - bonding the encapsulation layer (130) in contact with the at least one supporting element (125).

10. Manufacturing method according to claim 9, wherein the sub-step of bonding the encapsulation layer (130) in contact with the at least one supporting element (125) is chosen from:

    - surface-activated bonding,
    - atomic diffusion bonding, and
    - oxide-oxide direct bonding.

11. Manufacturing method according to any one of claims 9 or 10, wherein the step of bonding the encapsulation layer (130) in contact with the at least one supporting element (125), the encapsulation layer and the at least one supporting element (125) have a temperature differential, the temperature differential preferably being between 10°C and 150°C, or between 20 and 100°C.

12. Manufacturing method according to any one of claims 9 to 11 wherein the step of forming the at least one supporting element (125) comprises:

    - formation of a respective extension of the or each supporting element (125) on the surface of the first substrate (100), said extension(s) extending over a height equal to the first distance d,
    - localized etching of the surface of the first substrate (100) to form the rest of the or each supporting element (125) and the subwavelength structures (111) of the set of subwavelength structures (111).

13. Manufacturing method according to claim 12, wherein, in the step of providing the first substrate (100), a substrate including the first substrate (100), an insulating layer (102) arranged in contact with the first substrate, and a semiconductor layer (103) in contact with the insulating layer (102) are provided, the sum of the thickness of the insulating layer (102) and the thickness of the semiconductor layer (103) being equal to the first distance d, and wherein the formation of a respective extension of the or each supporting element (125) includes a localized etching of the semiconductor layer (103) and the insulating layer (102).

FIG. 1

FIG. 2A

FIG. 2B

FIG. 3A

FIG. 3B

FIG. 4A

FIG. 4B

FIG. 5

FIG. 6A

100

103
102
d

FIG. 6B

100

103
102
d

FIG. 6C

100

103

102

111

d

FIG. 6D

100

103

102

111

d

FIG. 6E

100

130

151

150

$E_C$

FIG. 6F

150
151
130

$E_C$

103
102

d

FIG. 6G

100

150
151
130
103
102

$E_C$

d

FIG. 6H

100

FIG. 6I

FIG. 6J

FIG. 6K

FIG. 7A

FIG. 7B

FIG. 8A

FIG. 8B

FIG. 9A

FIG. 9B

FIG. 10A

FIG. 10B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2019222070 A

**Littérature non-brevet citée dans la description**

- **A. SHE**. de ses coauteurs publiés dans le journal scientifique. *Optics express*, vol. 26 (2), 1573-1585
- **H. TAKAGI**. *Applied Physics Letters*, February 1996, vol. 68, 2222
- **T. SHIMATSU** ; **M. UOMOTO**. *Journal of Vaccum Science & Technology*, 28 June 2018, vol. 28, 706
- **SAJAN SHRESTHA**. *Light: Science & Applications*, 2018, vol. 7